# EUROPEAN PATENT APPLICATION

(11) **EP 4 794 430 A1**
(43) Date of publication of application: **19.08.2026**
(21) Application number: 24884577.8
(22) Date of filing: 24.10.2024
(51) Int. Cl.: H04W 72/40

(54) **COMMUNICATION METHOD AND APPARATUS**

(30) Priority: 02.11.2023 CN 202311454231
(71) Applicant: HUAWEI TECHNOLOGIES CO., LTD., Shenzhen, Guangdong 518129 (CN)
(72) Inventor: LI, Xiangyu, Shenzhen, Guangdong 518129 (CN); PENG, Wenjie, Shenzhen, Guangdong 518129 (CN)
(74) Representative: MERH-IP Matias Erny Reichl Hoffmann Patentanwälte PartG mbB
(86) International application number: PCT/CN2024/127160
(87) International publication number: WO 2025/092573

(57) **Abstract**

This application pertains to the field of communication technologies, and provides a communication method and an apparatus, to improve communication performance of SL communication. In the method, after receiving an SL RRC reconfiguration complete message, a terminal determines, based on an inclusion relationship between a first carrier list and a second carrier list, to perform sidelink SL communication by using a first resource set or a second resource set, where the first resource set is a resource set determined based on the first carrier list and the second carrier list, and the second resource set is a resource set determined based on the second carrier list. According to the method, the terminal can appropriately use two carrier lists, to improve the communication performance of the SL communication.

## Description

### CROSS-REFERENCE TO RELATED APPLICATIONS

This application claims priority to Chinese Patent Application No. 202311454231.5, filed with the China National Intellectual Property Administration on November 2, 2023 and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

In sidelink (sidelink, SL) communication, some terminals support single-carrier communication, and the terminals use a first carrier list to provide an SL configuration in an SL communication process, where the first carrier list may include only one carrier. In addition to supporting the single-carrier communication, some terminals may further support multi-carrier communication. In addition to using the first carrier list, the terminals that support the multi-carrier communication may further use a second carrier list to provide an SL configuration, where the second carrier list may include a plurality of carriers.

For the terminals that support the multi-carrier communication, there are two available carrier lists. If the terminals inappropriately use the two carrier lists to perform SL communication, communication performance of the SL communication may be affected.

### SUMMARY

This application provides a communication method and an apparatus, to improve communication performance of SL communication.

According to a first aspect, a communication method is provided. The method may be performed by a terminal or a chip, a chip system, or a circuit located in the terminal. The method may be implemented by using the following steps: receiving a sidelink radio resource control SL RRC reconfiguration complete message; and after receiving the SL RRC reconfiguration complete message, determining, based on an inclusion relationship between a first carrier list and a second carrier list, to perform sidelink SL communication by using a first resource set or a second resource set, where the first resource set is a resource set determined based on the first carrier list and the second carrier list, and the second resource set is a resource set determined based on the second carrier list.

According to the communication method provided in this embodiment of this application, after receiving the SL RRC reconfiguration complete message, the terminal may determine, based on the inclusion relationship between the first carrier list and the second carrier list, to perform sidelink SL communication by using the second carrier list, or perform SL communication by using the first carrier list and the second carrier list, so that the terminal can appropriately use two carrier lists, to improve communication performance of the SL communication.

In a possible implementation, the first carrier list is a carrier list corresponding to single-carrier SL communication, and the second carrier list is a carrier list corresponding to multi-carrier SL communication.

In a possible implementation, when the second carrier list does not include a carrier in the first carrier list, after receiving the SL RRC reconfiguration complete message, the terminal may perform SL communication by using the first resource set, where the first resource set includes the carrier included in the first carrier list and/or a resource pool corresponding to the carrier, and a carrier included in the second carrier list and/or a resource pool corresponding to the carrier.

In the foregoing implementation, when the second carrier list does not include the carrier in the first carrier list, after receiving the SL RRC reconfiguration complete message, the terminal may perform SL communication by using the first carrier list and the second carrier list. This helps the terminal appropriately use the two carrier lists when the second carrier list does not include the carrier in the first carrier list, to improve the communication performance of the SL communication.

In a possible implementation, when the second carrier list does not include the carrier in the first carrier list, after receiving the SL RRC reconfiguration complete message, the terminal may obtain a first channel busy ratio CBR measurement configuration from a network device, where the first CBR measurement configuration includes a first carrier index and a first resource pool identifier, the first carrier index is numbered based on a carrier included in the first resource set, and the first resource pool identifier includes an identifier of a resource pool corresponding to each carrier indicated by the first carrier index. The terminal sends a first CBR measurement result to the network device, where the first CBR measurement result includes the first carrier index and the first resource pool identifier.

In a possible implementation, identifiers of resource pools corresponding to a first carrier and a second carrier are the same; and the first carrier is any carrier in the first carrier list, and the second carrier is any carrier in the second carrier list; or the first carrier and the second carrier are any two carriers in the second carrier list.

In the foregoing implementation, when the second carrier list does not include the carrier in the first carrier list, it is specified that after receiving the SL RRC reconfiguration complete message, the terminal receives a CBR measurement configuration and sends a CBR measurement result by using the carriers included in the first carrier list and the second carrier list, to perform SL communication, so that the terminal appropriately uses the two carrier lists, and appropriately processes the CBR measurement configuration and sends the CBR measurement result, to improve the communication performance of the SL communication. In addition, the CBR measurement configuration and the CBR measurement result include a carrier index, so that resource pool identifiers corresponding to different carriers may be the same, and a current resource pool identifier definition is reused.

In a possible implementation, when the second carrier list does not include the carrier in the first carrier list, after receiving the SL RRC reconfiguration complete message, the terminal may obtain a second CBR measurement configuration from a network device, where the second CBR measurement configuration includes a first resource pool identifier, and the first resource pool identifier includes an identifier of a resource pool corresponding to a carrier included in the first resource set. The terminal sends a second CBR measurement result to the network device, where the second CBR measurement result includes the first resource pool identifier.

In a possible implementation, identifiers of the resource pools corresponding to the carrier included in the first carrier list and the carrier included in the second carrier list are different; or identifiers of resource pools corresponding to any two of carriers included in the second carrier list are different.

In the foregoing implementation, when the second carrier list does not include the carrier in the first carrier list, it is specified that after receiving the SL RRC reconfiguration complete message, the terminal receives a CBR measurement configuration and sends a CBR measurement result by using the carriers included in the first carrier list and the second carrier list, to perform SL communication, so that the terminal appropriately uses the two carrier lists, and appropriately processes the CBR measurement configuration and sends the CBR measurement result, to improve the communication performance of the SL communication. In addition, the CBR measurement configuration and the CBR measurement result include a resource pool identifier, and resource pool identifiers corresponding to different carriers are limited to be different, so that the CBR measurement configuration and the CBR measurement result clearly correspond to a resource pool corresponding to a carrier.

In a possible implementation, when the second carrier list does not include the carrier in the first carrier list, after receiving the SL RRC reconfiguration complete message, the terminal may obtain first sidelink indication information from a network device; and perform SL communication by using a resource indicated by the first sidelink indication information, where the first sidelink indication information includes a first carrier index, the first carrier index indicates the resource for performing SL communication, and the first carrier index is numbered based on a carrier included in the first resource set.

In a possible implementation, indexes or identifiers of resource pools corresponding to a first carrier and a second carrier are the same; and the first carrier is any carrier in the first carrier list, and the second carrier is any carrier in the second carrier list; or the first carrier and the second carrier are any two carriers in the second carrier list.

In the foregoing implementation, when the second carrier list does not include the carrier in the first carrier list, it is specified that after receiving the SL RRC reconfiguration complete message, the terminal processes, by using the carriers included in the first carrier list and the second carrier list, a sidelink resource obtained from the network device, to perform SL communication, so that the terminal appropriately uses the two carrier lists, and appropriately processes the sidelink resource obtained from the network device, to improve the communication performance of the SL communication. In addition, sidelink indication information includes a carrier index, so that resource pool indexes or resource pool identifiers corresponding to different carriers may be the same, and a current resource pool index or resource pool identifier definition is reused.

In a possible implementation, when the second carrier list does not include the carrier in the first carrier list, after receiving the SL RRC reconfiguration complete message, the terminal may obtain second sidelink indication information from a network device; and perform SL communication by using a resource indicated by the second sidelink indication information, where the second sidelink indication information includes a first resource pool index or a first resource pool identifier, the first resource pool index or the first resource pool identifier indicates the resource for performing SL communication, the first resource pool index is numbered based on a resource pool corresponding to a carrier included in the first resource set, and the first resource pool identifier includes an identifier of the resource pool corresponding to the carrier included in the first resource set.

In a possible implementation, indexes or identifiers of the resource pools corresponding to the carrier included in the first carrier list and the carrier included in the second carrier list are different; or indexes or identifiers of resource pools corresponding to any two of carriers included in the second carrier list are different.

In the foregoing implementation, when the second carrier list does not include the carrier in the first carrier list, it is specified that after receiving the SL RRC reconfiguration complete message, the terminal processes, by using the carriers included in the first carrier list and the second carrier list, a sidelink resource obtained from the network device, to perform SL communication, so that the terminal appropriately uses the two carrier lists, and appropriately processes the sidelink resource obtained from the network device, to improve the communication performance of the SL communication. In addition, sidelink resource indication information includes a resource pool index or a resource pool identifier, and resource pool indexes or resource pool identifiers corresponding to different carriers are limited to be different, so that the sidelink resource indication information clearly corresponds to a resource in a resource pool corresponding to a carrier.

In a possible implementation, when the second carrier list includes a carrier in the first carrier list, after receiving the SL RRC reconfiguration complete message, the terminal may perform SL communication by using the second resource set, where the second resource set includes a carrier included in the second carrier list and/or a resource pool corresponding to the carrier.

In the foregoing implementation, when the second carrier list includes the carrier in the first carrier list, after receiving the SL RRC reconfiguration complete message, the terminal may perform SL communication by using the second carrier list. This helps the terminal appropriately use the two carrier lists, to improve the communication performance of the SL communication.

In a possible implementation, when the second carrier list includes the carrier in the first carrier list, after receiving the SL RRC reconfiguration complete message, the terminal may obtain a third CBR measurement configuration from a network device, where the third CBR measurement configuration includes a second carrier index and a second resource pool identifier, the second carrier index is numbered based on a carrier included in the second resource set, and the second resource pool identifier includes an identifier of a resource pool corresponding to each carrier indicated by the second carrier index. The terminal sends a third CBR measurement result to the network device, where the third CBR measurement result includes the second carrier index and the second resource pool identifier.

In a possible implementation, identifiers of resource pools corresponding to a first carrier and a second carrier are the same; and the first carrier is any carrier in the first carrier list, and the second carrier is any carrier in the second carrier list; or the first carrier and the second carrier are any two carriers in the second carrier list.

In the foregoing implementation, when the second carrier list includes the carrier in the first carrier list, it is specified that after receiving the SL RRC reconfiguration complete message, the terminal receives a CBR measurement configuration and sends a CBR measurement result by using the carrier included in the second carrier list, to perform SL communication, so that the terminal appropriately uses the two carrier lists, and appropriately processes the CBR measurement configuration and sends the CBR measurement result, to improve the communication performance of the SL communication. In addition, the CBR measurement configuration and the CBR measurement result include a carrier index, so that resource pool identifiers corresponding to different carriers may be the same, and a current resource pool identifier definition is reused.

In a possible implementation, when the second carrier list includes the carrier in the first carrier list, after receiving the SL RRC reconfiguration complete message, the terminal may obtain a fourth CBR measurement configuration from a network device, where the fourth CBR measurement configuration includes a second resource pool identifier, and the second resource pool identifier includes an identifier of a resource pool corresponding to a carrier included in the second resource set. The terminal sends a fourth CBR measurement result to the network device, where the fourth CBR measurement result includes the second resource pool identifier.

In a possible implementation, identifiers of the resource pools corresponding to the carrier included in the first carrier list and the carrier included in the second carrier list are different; or identifiers of resource pools corresponding to any two of carriers included in the second carrier list are different.

In the foregoing implementation, when the second carrier list includes the carrier in the first carrier list, it is specified that after receiving the SL RRC reconfiguration complete message, the terminal receives a CBR measurement configuration and sends a CBR measurement result by using the carrier included in the second carrier list, to perform SL communication, so that the terminal appropriately uses the two carrier lists, and appropriately processes the CBR measurement configuration and sends the CBR measurement result, to improve the communication performance of the SL communication. In addition, the CBR measurement configuration and the CBR measurement result include a resource pool identifier, and resource pool identifiers corresponding to different carriers are limited to be different, so that the CBR measurement configuration and the CBR measurement result clearly correspond to a resource pool corresponding to a carrier.

In a possible implementation, when the second carrier list includes the carrier in the first carrier list, after receiving the SL RRC reconfiguration complete message, the terminal may obtain third sidelink indication information from a network device; and perform SL communication by using a resource indicated by the third sidelink indication information, where the third sidelink indication information includes a second carrier index, the second carrier index indicates the resource for performing SL communication, and the second carrier index is numbered based on a carrier included in the second resource set.

In a possible implementation, indexes or identifiers of resource pools corresponding to a first carrier and a second carrier are the same; and the first carrier is any carrier in the first carrier list, and the second carrier is any carrier in the second carrier list; or the first carrier and the second carrier are any two carriers in the second carrier list.

In the foregoing implementation, when the second carrier list includes the carrier in the first carrier list, it is specified that after receiving the SL RRC reconfiguration complete message, the terminal processes, by using the carrier included in the second carrier list, a sidelink resource obtained from the network device, to perform SL communication, so that the terminal appropriately uses the two carrier lists, and appropriately processes the sidelink resource obtained from the network device, to improve the communication performance of the SL communication. In addition, sidelink indication information includes a carrier index, so that resource pool indexes or resource pool identifiers corresponding to different carriers may be the same, and a current resource pool index or resource pool identifier definition is reused.

In a possible implementation, when the second carrier list includes the carrier in the first carrier list, after receiving the SL RRC reconfiguration complete message, the terminal may obtain fourth sidelink indication information from a network device; and perform SL communication by using a resource indicated by the fourth sidelink indication information, where the fourth sidelink indication information includes a second resource pool index or a second resource pool identifier, the second resource pool index or the second resource pool identifier indicates the resource for performing SL communication, the second resource pool index is numbered based on a resource pool corresponding to a carrier included in the second resource set, and the second resource pool identifier includes an identifier of the resource pool corresponding to the carrier included in the second resource set.

In a possible implementation, indexes or identifiers of the resource pools corresponding to the carrier included in the first carrier list and the carrier included in the second carrier list are different; or indexes or identifiers of resource pools corresponding to any two of carriers included in the second carrier list are different.

In the foregoing implementation, when the second carrier list includes the carrier in the first carrier list, it is specified that after receiving the SL RRC reconfiguration complete message, the terminal processes, by using the carrier included in the second carrier list, a sidelink resource obtained from the network device, to perform SL communication, so that the terminal appropriately uses the two carrier lists, and appropriately processes the sidelink resource obtained from the network device, to improve the communication performance of the SL communication. In addition, sidelink resource indication information includes a resource pool index or a resource pool identifier, and resource pool indexes or resource pool identifiers corresponding to different carriers are limited to be different, so that the sidelink resource indication information clearly corresponds to a resource in a resource pool corresponding to a carrier.

In a possible implementation, the terminal may obtain the first carrier list and the second carrier list by using a specified message, where the specified message is any one of the following messages: radio resource control RRC configuration information, RRC reconfiguration information, a system information block SIB message, and a pre-configuration message.

According to a second aspect, a communication method is provided. The method may be performed by a terminal or a chip, a chip system, or a circuit located in the terminal. The method may be implemented by using the following steps: obtaining a channel busy ratio CBR measurement configuration from a network device, where the CBR measurement configuration includes a carrier index and a resource pool identifier, the carrier index indicates a target carrier, and the resource pool identifier indicates a target resource pool in resource pools corresponding to the target carrier; and sending a CBR measurement result to the network device, where the CBR measurement result includes the carrier index and the resource pool identifier.

According to the communication method provided in this embodiment of this application, the CBR measurement configuration and the CBR measurement result indicate, by using the carrier index and the resource pool identifier, a resource pool corresponding to a specified carrier. Therefore, even if identifiers of resource pools corresponding to two different carriers are the same, a carrier corresponding to the resource pool indicated by the resource pool identifier may be distinguished by using the carrier index.

In a possible implementation, identifiers of resource pools corresponding to a first carrier and a second carrier are the same; and the first carrier is any carrier in a first carrier list, and the second carrier is any carrier in a second carrier list; or the first carrier and the second carrier are any two carriers in a second carrier list.

In the foregoing implementation, the CBR measurement configuration and the CBR measurement result include the carrier index and the resource pool identifier, so that resource pool identifiers corresponding to different carriers may be the same, and a current resource pool identifier definition is reused.

According to a third aspect, a communication method is provided. The method may be performed by a terminal or a chip, a chip system, or a circuit located in the terminal. The method may be implemented by using the following steps: obtaining sidelink indication information from a network device, where the sidelink indication information includes a carrier index, and the carrier index indicates a resource for performing SL communication; and performing SL communication by using the resource indicated by the sidelink indication information.

According to the communication method provided in this embodiment of this application, the sidelink indication information includes the carrier index, and the carrier index indicates a resource pool corresponding to a carrier. Therefore, even if indexes or identifiers of resource pools corresponding to two different carriers are the same, a carrier corresponding to the resource pool indicated by the sidelink indication information may be distinguished by using the carrier index.

In a possible implementation, indexes or identifiers of resource pools corresponding to a first carrier and a second carrier are the same; and the first carrier is any carrier in a first carrier list, and the second carrier is any carrier in a second carrier list; or the first carrier and the second carrier are any two carriers in a second carrier list.

In the foregoing implementation, the sidelink indication information includes the carrier index, so that resource pool indexes or resource pool identifiers corresponding to different carriers may be the same, and a current resource pool identifier definition is reused.

According to a fourth aspect, a terminal is provided. The terminal may include a module configured to perform any method provided in the first aspect, the second aspect, or the third aspect.

According to a fifth aspect, a terminal is provided, and includes a memory and a processor. The memory stores a computer program that may be run on the processor. When the computer program is executed by the processor, the processor is caused to implement any method provided in the first aspect, the second aspect, or the third aspect.

According to a sixth aspect, a communication system is provided, and includes a terminal that supports SL communication. The terminal is the terminal provided in the fifth aspect.

According to a seventh aspect, an embodiment of this application provides a computer-readable storage medium. The computer-readable storage medium stores computer-executable instructions. The computer-executable instructions are for causing a computer to perform any method provided in the first aspect, the second aspect, or the third aspect.

According to an eighth aspect, an embodiment of this application provides a computer program product, including computer-executable instructions. The computer-executable instructions are for causing a computer to perform any method provided in the first aspect, the second aspect, or the third aspect.

For technical effects that can be achieved by any one of the fourth aspect to the eighth aspect, refer to the descriptions of the technical effects in the first aspect to the third aspect. Details are not described herein again.

### BRIEF DESCRIPTION OF DRAWINGS

FIG. 1 is a diagram of a network architecture of a communication system according to an embodiment of this application;
FIG. 2 is a flowchart of a communication method according to an embodiment of this application;
FIG. 3 is a diagram of interaction between a terminal and a network device according to an embodiment of this application;
FIG. 4 is another diagram of interaction between a terminal and a network device according to an embodiment of this application;
FIG. 5 is another diagram of interaction between a terminal and a network device according to an embodiment of this application;
FIG. 6 is another diagram of interaction between a terminal and a network device according to an embodiment of this application;
FIG. 7 is a flowchart of another communication method according to an embodiment of this application;
FIG. 8 is another diagram of interaction between a terminal and a network device according to an embodiment of this application;
FIG. 9 is another diagram of interaction between a terminal and a network device according to an embodiment of this application;
FIG. 10 is another diagram of interaction between a terminal and a network device according to an embodiment of this application;
FIG. 11 is another diagram of interaction between a terminal and a network device according to an embodiment of this application;
FIG. 12 is a block diagram of a structure of a terminal according to an embodiment of this application;
FIG. 13 is a block diagram of a structure of another terminal according to an embodiment of this application;
FIG. 14 is a block diagram of a structure of another terminal according to an embodiment of this application; and
FIG. 15 is a diagram of a structure of a terminal according to an embodiment of this application.

### DESCRIPTION OF EMBODIMENTS

To make the objectives, technical solutions, and advantages of embodiments of this application clearer, the following describes embodiments of this application in detail with reference to the accompanying drawings. Terms used in implementations of this application are merely for explaining specific embodiments of this application, but are not intended to limit this application.

Before specific solutions provided in embodiments of this application are described, some terms in this application are explained and described, to facilitate understanding by a person skilled in the art, but not to limit the terms in this application.

(1) SL communication: The SL communication is a communication manner in which two peer user nodes directly communicate with each other. For example, terminals may perform SL communication with each other. In the SL communication, a transmitting end may send data to a receiving end through an SL physical shared channel.

(2) Carrier aggregation (carrier aggregation, CA): The CA is a wireless communication technology, and can combine signals in a plurality of frequency bands. Through the CA technology, a terminal may simultaneously use a plurality of frequency bands to perform data transmission, to improve bandwidth and a data transmission speed of a wireless network. In addition, the CA technology can also improve communication coverage and reliability.

In embodiments of this application, "a plurality of" means two or more. In view of this, in embodiments of this application, "a plurality of" may alternatively be understood as "at least two". "At least one" may be understood as one or more, for example, one, two, or more. For example, including at least one means including one, two, or more, and there is no limitation on which is included. For example, including at least one of A, B, and C may mean including A, B, C, A and B, A and C, B and C, or A, B, and C. "And/or" describes the association relationship between the associated objects, and represents that three relationships may exist. For example, A and/or B may represent the following three cases: Only A exists, both A and B exist, and only B exists. In addition, unless otherwise specified, the character "/" generally indicates an "or" relationship between the associated objects.

Unless otherwise specified, ordinal numbers such as "first" and "second" in embodiments of this application are for distinguishing between a plurality of objects, but are not intended to limit an order, a time sequence, priorities, or importance of the plurality of objects.

The foregoing describes the some terms in embodiments of this application. The following describes an architecture of a network system to which a method provided in this application is applied.

The communication method provided in this application may be applied to a 5G new radio (new radio, NR) system, or may be applied to another communication system, which may be, for example, an internet of things (internet of things, IoT) system, a vehicle-to-everything (vehicle-to-everything, V2X) system, a narrowband internet of things (narrowband internet of things, NB-IoT) system, a long term evolution (long term evolution, LTE) system, a fifth-generation (5G) communication system, an LTE and 5G hybrid architecture, a 5G new radio (new radio, NR) system, or a new communication system that will emerge in future communication development.

The terminal in embodiments of this application is an entity that is on a user side and that is configured to receive or transmit a signal. The terminal may be a device that provides a user with a voice and/or data connectivity, for example, a handheld device or a vehicle-mounted device that has a wireless connection function. The terminal may alternatively be another processing device connected to a wireless modem. The terminal may communicate with one or more core networks via a radio access network (radio access network, RAN). The terminal may also be referred to as a wireless terminal, a subscriber unit (subscriber unit), a subscriber station (subscriber station), a mobile station (mobile station), a remote station (remote station), an access point (access point), a remote terminal (remote terminal), an access terminal (access terminal), a user terminal (user terminal), a user agent (user agent), a user device (user device), user equipment (user equipment, UE), or the like. The terminal may be a mobile terminal, for example, a mobile phone (also referred to as a "cellular" phone), and a computer having the mobile terminal, for example, may be a portable, pocket-sized, handheld, computer built-in, or in-vehicle mobile apparatus, which exchanges voice and/or data with a radio access network. For example, the terminal may alternatively be a device like a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). For example, a common terminal includes a mobile phone, a tablet computer, a notebook computer, a palmtop computer, a mobile internet device (mobile internet device, MID), a wearable device like a smartwatch, a smart band, or a pedometer, and a smart appliance like a smart refrigerator or a smart washer. However, embodiments of this application are not limited thereto.

A network device in embodiments of this application is an entity that is on a network side and that is configured to transmit or receive a signal, may be configured to mutually convert a received over-the-air frame and an internet protocol (internet protocol, IP) packet, and serves as a router between the terminal and a remaining part of an access network, where the remaining part of the access network may include an IP network and the like. The network device may further coordinate attribute management of an air interface. For example, the network device may be an evolved NodeB (evolved NodeB, eNB or eNodeB) in LTE, a new radio controller (new radio controller, NR controller), a gNodeB (gNB) in a 5G system, a central network element (central unit), a new radio base station, a remote radio unit, a micro base station, a relay (relay), a distributed network element (distributed unit), a transmission reception point (transmission reception point, TRP), a transmission point (transmission point, TP), or any other radio access device. However, embodiments of this application are not limited thereto.

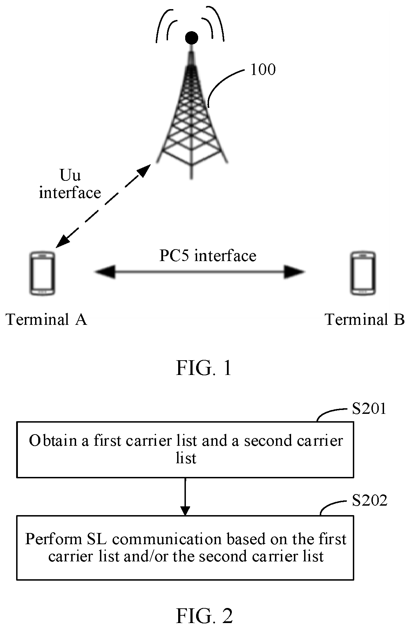

FIG. 1 shows a communication system according to an embodiment of this application. The communication system includes two terminals: a terminal A and a terminal B. The terminal is referred to as UE in the following descriptions. The terminal A and the terminal B may perform data communication with each other by using a network device 100, or communication between the UEs may be directly performed without using a network device 100. An interface between the UEs may be referred to as a PC5 interface, which is similar to a Uu interface between a UE and a base station. A communication link between the terminal A and the terminal B may be referred to as an SL. A typical application scenario of SL communication may be a vehicle-to-everything system. In the vehicle-to-everything system, each vehicle may be understood as UE, and data transmission may be directly performed between UEs through an SL without using a network, so that a communication delay can be effectively reduced. The SL may support unicast, multicast, and broadcast.

The UE (for example, the terminal A or the terminal B) in the communication system may work in a mode (a mode 1) in which a network device allocates a resource, or may work in a mode (a mode 2) in which a user selects a resource. The mode 1 may be applied to SL communication in a case in which there is network coverage. The network device may allocate, to the terminal A and the terminal B based on a reported buffer status report (buffer status report, BSR) of the terminal, resources for performing SL communication. In the mode 2, a transmitting end selects a transmission resource from a resource pool configured by the network device or a preset resource pool for communication.

For example, the terminal A may be used as the transmitting end of data or signaling, and the terminal B may be used as a receiving end of the data or the signaling. The terminal A may be in an in-coverage (in-coverage, IC) state or an out-of-coverage (out-of-coverage, OoC) state. When the terminal A is in a radio resource control (radio resource control) RRC connected state, the terminal A may obtain, from the base station, the SL resource for performing SL communication. The communication mode may be referred to as a resource allocation mode in the mode 1. Specifically, the base station may schedule the SL resource for the terminal by using downlink control information (downlink control information, DCI), or configure an SL configured grant (SL configured grant) for the terminal by using an RRC message. When the terminal A (which may be in the RRC connected state, an RRC inactive state, an RRC idle state, or the OoC state) works in the mode 2, the terminal A may receive an SL resource pool configuration from the base station, or obtain the SL resource pool configuration from a pre-configuration, and then select the SL resource from the SL resource pool for sending. The terminal A may select the SL resource randomly or based on a result of sensing (sensing) or partial sensing (partial sensing).

Optionally, the communication system may further include the network device, and the network device may perform uplink/downlink communication with the UE (for example, the terminal A or the terminal B) in the communication system. When the terminal (for example, the terminal A or the terminal B) in the communication system works in the mode 1, the network device may further allocate, to the terminal A or the terminal B, the resource for SL communication.

FIG. 1 is merely a diagram, and a type of the communication system, a quantity and types of devices included in the communication system, and the like are not specifically limited.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

In sidelink SL communication, some terminals support single-carrier communication, and the terminals use a first carrier list to provide an SL configuration in an SL communication process. In addition to supporting the single-carrier communication, some terminals may further support CA, that is, support multi-carrier communication. In addition to using the first carrier list, the terminals that support the multi-carrier communication may further use a second carrier list to provide an SL configuration.

For how the terminal performs SL communication by using two carrier lists, embodiments of this application provide a communication method and an apparatus. The method and the apparatus are based on a same concept. Because the method and the apparatus have similar problem-resolving principles, for implementation of the apparatus and the method, refer to each other. Repeated parts are not described again.

One terminal may receive data sent by one or more other terminals. In the following, the terminal that receives the data is referred to as a receiving end, and the terminal that sends the data is referred to as a transmitting end. That is, one receiving end may receive the data sent by one or more transmitting ends. It should be understood that the transmitting end and the receiving end are relative. The transmitting end may also have a receiving function, and the receiving end may also have a sending function.

In embodiments of this application, the terminal A may be the transmitting end, the terminal B may be the receiving end, and both the transmitting end and the receiving end support the CA.

With reference to the accompanying drawings, the following describes in detail the communication method provided in embodiments of this application.

In some embodiments, the second carrier list does not include a carrier in the first carrier list, and the terminal may perform the communication method with reference to a communication method shown in FIG. 2. The communication method shown in FIG. 2 may be performed by a transmitting end (referred to as a terminal A below). As shown in FIG. 2, the communication method may include the following steps.

S201: Obtain a first carrier list and a second carrier list.

The second carrier list does not include a carrier in the first carrier list. In other words, a carrier included in the second carrier list does not overlap or intersect the carrier included in the first carrier list.

For example, the terminal A may obtain the first carrier list and the second carrier list by using specified information, where the specified message is any one of the following messages: RRC dedicated signaling, a system information block (system information block, SIB) message, and a pre-configuration message, and the RRC dedicated signaling may include but is not limited to RRC configuration information, RRC reconfiguration information, and the like. In some embodiments, the terminal may obtain the first carrier list by using first specified information, where the first specified message may be any one of the following messages: RRC configuration information, RRC reconfiguration information, a SIB message, and a pre-configuration message. The terminal may obtain the second carrier list by using second specified information, where the second specified message may be any one of the following messages: RRC configuration information, RRC reconfiguration information, a SIB message, and a pre-configuration message.

The first carrier list is a carrier list corresponding to single-carrier SL communication, and the second carrier list is a carrier list corresponding to multi-carrier SL communication; or the first carrier list is a carrier list corresponding to SL communication in R16 or R17, and the second carrier list is a carrier list corresponding to SL communication in R18 or R18+. R16 is a 16^{th} public release protocol of the international telecommunications convention, R17 is a 17^{th} public release protocol of the international telecommunications convention, R18 is an R18 protocol in the international telecommunications convention, R18+ is an R18+ protocol in the international telecommunications convention, and the R18+ protocol may be a protocol release after the R18 protocol. In some embodiments, the first carrier list may include only one carrier, or the first carrier list may include only an SL configuration corresponding to one carrier.

S202: Perform SL communication based on the first carrier list and/or the second carrier list.

In some embodiments, before the terminal A receives an SL RRC reconfiguration complete message sent by a terminal B, in other words, before carrier configuration signaling is completed, the terminal A may perform SL communication based on the first carrier list. That the carrier configuration signaling is completed means that a carrier configuration is exchanged between the terminals, and corresponding completion signaling is sent. For example, the terminal A sends an SL RRC reconfiguration message to the terminal B, where the SL RRC reconfiguration message includes the carrier configuration. After receiving the SL RRC reconfiguration message sent by the terminal A, the terminal B sends the SL RRC reconfiguration complete message to the terminal A. This may be considered as that the carrier configuration signaling between the terminal A and the terminal B is completed. That the terminal A performs SL communication based on the first carrier list may be understood as that the terminal A performs SL communication by using the carrier included in the first carrier list or that the terminal A performs SL communication by using a resource pool corresponding to the carrier included in the first carrier list.

After the terminal A receives the SL RRC reconfiguration complete message sent by the terminal B, in other words, after the carrier configuration signaling is completed, the terminal A may perform SL communication based on the first carrier list and the second carrier list. For example, the terminal A may perform SL communication by using the carrier included in the first carrier list and the carrier included in the second carrier list; or the terminal A may perform SL communication by using the resource pool corresponding to the carrier included in the first carrier list and a resource pool corresponding to the carrier included in the second carrier list. For example, assuming that the first carrier list includes a carrier 1, and the second carrier list includes a carrier 2, a carrier 3, and a carrier 4, the terminal A may perform SL communication by using the carrier 1, the carrier 2, the carrier 3, and the carrier 4. That is, the terminal A may select, from the carrier 1, the carrier 2, the carrier 3, and the carrier 4, an SL resource for performing data transmission. Alternatively, the terminal A may perform SL communication by using a resource pool corresponding to the carrier 1, a resource pool corresponding to the carrier 2, a resource pool corresponding to the carrier 3, and a resource pool corresponding to the carrier 4. That is, the terminal A may select, from the resource pool corresponding to the carrier 1, the resource pool corresponding to the carrier 2, the resource pool corresponding to the carrier 3, and the resource pool corresponding to the carrier 4, an SL resource for performing data transmission. The RRC reconfiguration complete message may be a 1^{st} SL RRC reconfiguration complete message sent by the terminal B to the terminal A after the terminal A establishes an SL communication link with the terminal B. The SL RRC reconfiguration complete message may be the SL RRC reconfiguration complete message corresponding to the SL RRC reconfiguration message including the SL carrier configuration.

In the foregoing embodiment, it is specified that after receiving the SL RRC reconfiguration complete message, the terminal performs SL communication based on the first carrier list and the second carrier list when the second carrier list does not include the carrier in the first carrier list based on an inclusion relationship between the first carrier list and the second carrier list, so that the terminal can appropriately use two carrier lists, to improve SL CA communication performance.

In some embodiments, the terminal A may receive a CBR measurement configuration from a network device. The CBR measurement configuration may include a carrier index and a resource pool identifier, indicating a resource pool corresponding to a specified carrier. The resource pool identifier indicates a resource pool corresponding to the CBR measurement configuration. The carrier index indicates a carrier. The carrier is a carrier corresponding to the resource pool corresponding to the CBR measurement configuration. The carrier index may be numbered based on the carrier included in the first carrier list and/or the carrier included in the second carrier list, and the resource pool identifier may include an identifier of a resource pool corresponding to each carrier indicated by the carrier index.

The first carrier list is the corresponding carrier list that supports the single-carrier SL communication, and the second carrier list is the carrier list that supports the multi-carrier SL communication. For example, the first carrier list may be the carrier list corresponding to the SL communication in R16/R17, and the second carrier list may be the carrier list corresponding to the SL communication in R18 or R18+. R16 is the 16^{th} public release protocol of the international telecommunications convention, R17 is the 17^{th} public release protocol of the international telecommunications convention, R18 is the R18 protocol in the international telecommunications convention, R18+ is the R18+ protocol in the international telecommunications convention, and the R18+ protocol may be the protocol release after the R18 protocol. In some embodiments, the first carrier list may include only one carrier, or the first carrier list may include only the SL configuration corresponding to one carrier.

Identifiers of resource pools corresponding to different carriers included in the first carrier list or the second carrier list may be the same. An identifier of a resource pool corresponding to a first carrier included in the first carrier list and an identifier of a resource pool corresponding to a second carrier included in the second carrier list may be the same. In other words, identifiers of resource pools corresponding to any two different carriers in the first carrier list and the second carrier list may be the same. The CBR measurement configuration indicates, by using the carrier index and the resource pool identifier, the resource pool corresponding to the specified carrier. Therefore, even if identifiers of resource pools corresponding to two different carriers are the same, a carrier corresponding to the resource pool indicated by the resource pool identifier may be distinguished by using the carrier index.

The terminal A may send a CBR measurement result to the network device based on the received CBR measurement configuration and the CBR measurement result. The CBR measurement result may include the carrier index and the resource pool identifier that are included in the CBR measurement configuration.

In the foregoing embodiment, the CBR measurement configuration and the CBR measurement result include the carrier index and the resource pool identifier, so that resource pool identifiers corresponding to different carriers may be the same, and a current resource pool identifier definition is reused.

In some other embodiments, the terminal A may receive sidelink indication information from a network device. The sidelink indication information may include a carrier index, indicating a resource for performing SL communication. The terminal A may perform SL communication by using the resource indicated by the sidelink indication information. The carrier index indicates a carrier. The carrier is a carrier corresponding to the resource corresponding to the sidelink indication information. The carrier index may be numbered based on the carrier included in the first carrier list and/or the carrier included in the second carrier list.

In some optional embodiments, the sidelink indication information may further include a resource pool index or a resource pool identifier in addition to the carrier index. The resource pool index or the resource pool identifier indicates a resource pool, and the resource pool is a resource pool corresponding to the resource indicated by the sidelink indication information. The resource pool index or the resource pool identifier may include an index or an identifier of a resource pool corresponding to each carrier indicated by a carrier index in sidelink indication information a.

The first carrier list is the corresponding carrier list that supports the single-carrier SL communication, and the second carrier list is the carrier list that supports the multi-carrier SL communication. For example, the first carrier list may be the carrier list corresponding to the SL communication in R16/R17, and the second carrier list may be the carrier list corresponding to the SL communication in R18 or R18+. R16 is the 16^{th} public release protocol of the international telecommunications convention, R17 is the 17^{th} public release protocol of the international telecommunications convention, R18 is the R18 protocol in the international telecommunications convention, R18+ is the R18+ protocol in the international telecommunications convention, and the R18+ protocol may be the protocol release after the R18 protocol. In some embodiments, the first carrier list may include only one carrier, or the first carrier list may include only the SL configuration corresponding to one carrier.

Indexes or identifiers of resource pools corresponding to different carriers included in the first carrier list or the second carrier list may be the same. An index or an identifier of a resource pool corresponding to a first carrier included in the first carrier list and an index or an identifier of a resource pool corresponding to a second carrier included in the second carrier list may be the same. In other words, indexes or identifiers of resource pools corresponding to any two different carriers in the first carrier list and the second carrier list may be the same.

In the foregoing embodiment, the sidelink indication information includes the carrier index, so that resource pool indexes or resource pool identifiers corresponding to different carriers may be the same, and a current resource pool index or resource pool identifier definition is reused.

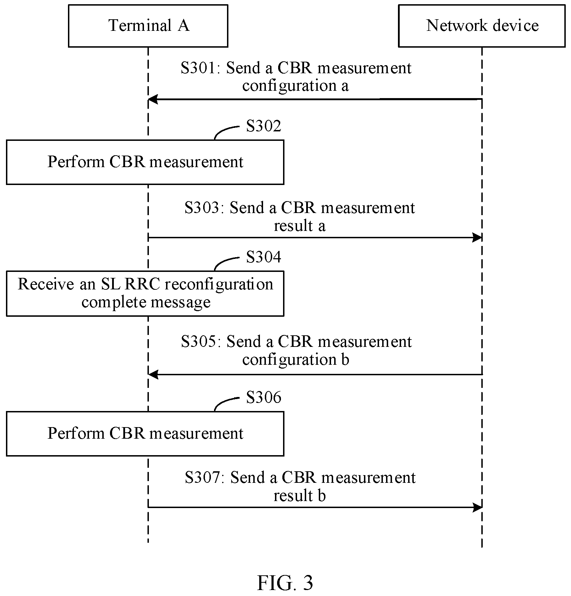

The following describes several specific embodiments of this application in detail. In an optional embodiment, as shown in FIG. 3, an interaction process between a terminal A and a network device may include the following steps.

S301: The network device sends a CBR measurement configuration a to the terminal A.

Before receiving an SL RRC reconfiguration complete message, the terminal A may obtain the channel busy ratio (channel busy ratio, CBR) measurement configuration a from the network device. The CBR measurement configuration a may include a carrier index and a resource pool identifier, indicating a resource pool corresponding to a specified carrier. The resource pool identifier indicates a resource pool corresponding to the CBR measurement configuration a. The carrier index indicates a carrier. The carrier is a carrier corresponding to the resource pool corresponding to the CBR measurement configuration a. The carrier index may be numbered based on a carrier included in a first carrier list, and the resource pool identifier may include an identifier of a resource pool corresponding to each carrier indicated by the carrier index. For example, assuming that the first carrier list includes M carriers, the carrier index may indicate, by using 0, 1, and M-1, the M carriers included in the first carrier list. The first carrier list is a carrier list corresponding to single-carrier SL communication. For example, the first carrier list may be a carrier list corresponding to SL communication in R16/R17. In some embodiments, the first carrier list may include only one carrier, or the first carrier list may include only an SL configuration corresponding to one carrier.

S302: The terminal A performs CBR measurement.

The terminal A may perform CBR measurement on each currently available SL resource, to determine a CBR of each resource pool. For example, currently available SL resources of the terminal A include a resource pool corresponding to a carrier 1, a resource pool corresponding to a carrier 2, a resource pool corresponding to a carrier 3, and a resource pool corresponding to a carrier 4. The terminal A may perform CBR measurement, to separately determine a CBR of the resource pool corresponding to the carrier 1, a CBR of the resource pool corresponding to the carrier 2, a CBR of the resource pool corresponding to the carrier 3, and a CBR of the resource pool corresponding to the carrier 4.

In some embodiments, step S302 may be performed before step S301.

S303: The terminal A sends a CBR measurement result a to the network device.

The CBR measurement result a may include the carrier index and the resource pool identifier that are included in the CBR measurement configuration a. The carrier index may be numbered based on the carrier included in the first carrier list, and the resource pool identifier may include the identifier of the resource pool corresponding to each carrier indicated by the carrier index. For example, assuming that the CBR measurement configuration a includes a carrier index of the carrier 1 and an identifier of the resource pool corresponding to the carrier 1, the CBR measurement result a may include the carrier index of the carrier 1 and the identifier of the resource pool corresponding to the carrier 1.

The network device receives the CBR measurement result a sent by the terminal A, and schedules an SL resource or provides an SL resource configuration for the terminal A based on the CBR that is of the resource pool and that is included in the CBR measurement result a.

The foregoing process may be understood as follows: Before receiving the SL RRC reconfiguration complete message, the terminal A performs SL communication based on the first carrier list.

S304: The terminal A receives the SL RRC reconfiguration complete message.

In some embodiments, when the terminal A performs SL communication with a terminal B, the terminal A sends an SL RRC reconfiguration message to the terminal B. After receiving the SL RRC reconfiguration message sent by the terminal A, the terminal B sends the SL RRC reconfiguration complete message to the terminal A. The RRC reconfiguration complete message may be a 1^{st} SL RRC reconfiguration complete message sent by the terminal B to the terminal A in a process in which the terminal A establishes an SL communication link with the terminal B. The SL RRC reconfiguration complete message may be the SL RRC reconfiguration complete message corresponding to the SL RRC reconfiguration message including an SL carrier configuration.

S305: The network device sends a CBR measurement configuration b to the terminal A.

After receiving the SL RRC reconfiguration complete message, the terminal A may obtain the CBR measurement configuration b from the network device. The CBR measurement configuration b may include a carrier index and a resource pool identifier. The carrier index may be numbered based on a carrier included in a first resource set. The first resource set may include the first carrier list and a second carrier list.

In an optional embodiment, the carrier index in the CBR measurement configuration b may be numbered based on the carrier included in the first carrier list and a carrier included in the second carrier list, and the resource pool identifier may include an identifier of a resource pool corresponding to each carrier indicated by the carrier index. For example, assuming that the first carrier list includes the carrier 1, and the second carrier list includes the carrier 2, the carrier 3, and the carrier 4, the carrier index in the CBR measurement configuration b may indicate the carrier 1, the carrier 2, the carrier 3, and the carrier 4 by using 0, 1, 2, and 3 respectively, and the resource pool identifier in the CBR measurement configuration b may include the identifier of the resource pool corresponding to the carrier 1, an identifier of the resource pool corresponding to the carrier 2, an identifier of the resource pool corresponding to the carrier 3, and an identifier of the resource pool corresponding to the carrier 4. For another example, assuming that the first carrier list includes the M carriers, and the second carrier list includes N carriers, the carrier index in the CBR measurement configuration b may indicate, by using 0, 1, and M-1, the M carriers included in the first carrier list, and indicate, by using M, M+1, and M+N-1, the N carriers included in the second carrier list.

In another optional embodiment, the carrier index in the CBR measurement configuration b may alternatively be numbered based on some carriers included in the first carrier list and the second carrier list. For example, the carrier index in the CBR measurement configuration b may be numbered based on all carriers included in the first carrier list, the carrier index in the CBR measurement configuration b may be numbered based on all carriers included in the second carrier list, the carrier index in the CBR measurement configuration b may be numbered based on some carriers in the first carrier list, the carrier index in the CBR measurement configuration b may be numbered based on some carriers in the second carrier list, or the carrier index in the CBR measurement configuration b may be numbered based on some carriers in the first carrier list and some carriers in the second carrier list.

The first carrier list is the corresponding carrier list that supports the single-carrier SL communication, and the second carrier list is a carrier list that supports multi-carrier SL communication. For example, the first carrier list may be the carrier list corresponding to the SL communication in R16/R17, and the second carrier list may be a carrier list corresponding to SL communication in R18 or R18+. R16 is a 16^{th} public release protocol of the international telecommunications convention, R17 is a 17^{th} public release protocol of the international telecommunications convention, R18 is an R18 protocol in the international telecommunications convention, R18+ is an R18+ protocol in the international telecommunications convention, and the R18+ protocol may be a protocol release after the R18 protocol. In some embodiments, the first carrier list may include only one carrier, or the first carrier list may include only the SL configuration corresponding to one carrier.

Identifiers of resource pools corresponding to different carriers included in the first carrier list or the second carrier list may be the same. An identifier of a resource pool corresponding to a first carrier included in the first carrier list and an identifier of a resource pool corresponding to a second carrier included in the second carrier list may be the same. In other words, identifiers of resource pools corresponding to any two different carriers in the first resource set may be the same. The CBR measurement configuration b indicates, by using the carrier index and the resource pool identifier, a resource pool corresponding to a specified carrier. Therefore, even if identifiers of resource pools corresponding to two different carriers are the same, a carrier corresponding to the resource pool indicated by the resource pool identifier may be distinguished by using the carrier index.

S306: The terminal A performs CBR measurement.

The terminal A may perform CBR measurement on each currently available SL resource, to determine a CBR of each resource pool. For example, currently available SL resources of the terminal A include the resource pool corresponding to the carrier 1, the resource pool corresponding to the carrier 2, the resource pool corresponding to the carrier 3, and the resource pool corresponding to the carrier 4. The terminal A may perform CBR measurement, to separately determine a CBR of the resource pool corresponding to the carrier 1, a CBR of the resource pool corresponding to the carrier 2, a CBR of the resource pool corresponding to the carrier 3, and a CBR of the resource pool corresponding to the carrier 4.

In some embodiments, step S306 may be performed before step S305.

S307: The terminal A sends a CBR measurement result b to the network device.

The CBR measurement result b may include the carrier index and the resource pool identifier that are included in the CBR measurement configuration b. The carrier index may be numbered based on the carrier included in the first resource set, and the resource pool identifier may include the identifier of the resource pool corresponding to each carrier indicated by the carrier index. For example, assuming that the CBR measurement configuration b includes the carrier 1, the identifier of the resource pool corresponding to the carrier 1, the carrier 2, and the identifier of the resource pool corresponding to the carrier 2, the CBR measurement result b may include the carrier 1, the identifier of the resource pool corresponding to the carrier 1, the carrier 2, and the identifier of the resource pool corresponding to the carrier 2.

For another example, assuming that the CBR measurement configuration b includes the carrier 1, the identifier of the resource pool corresponding to the carrier 1, the carrier 2, the identifier of the resource pool corresponding to the carrier 2, the carrier 3, the identifier of the resource pool corresponding to the carrier 3, the carrier 4, and the identifier of the resource pool corresponding to the carrier 4, the CBR measurement result b may include the carrier 1, the identifier of the resource pool corresponding to the carrier 1, the carrier 2, the identifier of the resource pool corresponding to the carrier 2, the carrier 3, the identifier of the resource pool corresponding to the carrier 3, the carrier 4, and the identifier of the resource pool corresponding to the carrier 4.

The network device receives the CBR measurement result b sent by the terminal A, and schedules an SL resource or provides an SL resource configuration for the terminal A based on the CBR that is of the resource pool and that is included in the CBR measurement result b.

The foregoing process may be understood as follows: After receiving the SL RRC reconfiguration complete message, the terminal A performs SL communication based on the first carrier list and the second carrier list.

In the foregoing embodiment, it is specified that after receiving the SL RRC reconfiguration complete message, the terminal receives a CBR measurement configuration and sends a CBR measurement result by using the carriers included in the first carrier list and the second carrier list, to perform SL communication, so that the terminal appropriately uses two carrier lists, and appropriately processes the CBR measurement configuration and sends the CBR measurement result, to improve SL CA communication performance. In addition, the CBR measurement configuration and the CBR measurement result include a carrier index, so that resource pool identifiers corresponding to different carriers may be the same, and a current resource pool identifier definition is reused.

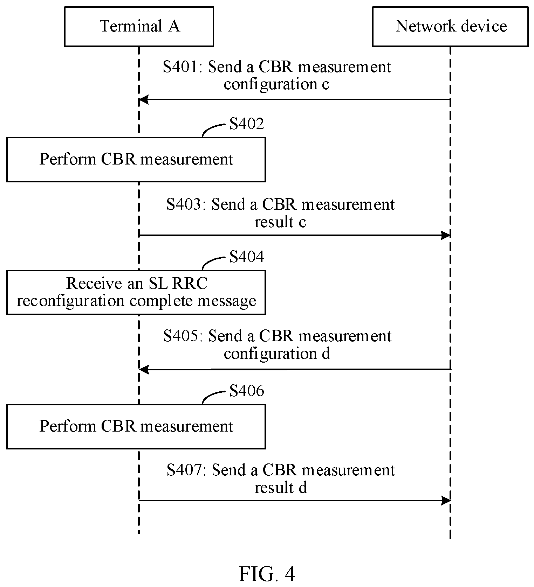

In another optional embodiment, as shown in FIG. 4, an interaction process between a terminal A and a network device may include the following steps.

S401: The network device sends a CBR measurement configuration c to the terminal A.

Before receiving an SL RRC reconfiguration complete message, the terminal A may obtain the CBR measurement configuration c from the network device. The CBR measurement configuration c may include a resource pool identifier. The resource pool identifier indicates a resource pool corresponding to the CBR measurement configuration. The resource pool identifier includes an identifier of a resource pool corresponding to a carrier included in a first carrier list. For example, the first carrier list may be a carrier list corresponding to SL communication in R16/R17. In some embodiments, the first carrier list may include only one carrier, or the first carrier list may include only an SL configuration corresponding to one carrier.

S402: The terminal A performs CBR measurement.

The terminal A may perform CBR measurement on each currently available SL resource, to determine a CBR of each resource pool. For example, currently available SL resources of the terminal A include a resource pool corresponding to a carrier 1, a resource pool corresponding to a carrier 2, a resource pool corresponding to a carrier 3, and a resource pool corresponding to a carrier 4. The terminal A may perform CBR measurement, to separately determine a CBR of the resource pool corresponding to the carrier 1, a CBR of the resource pool corresponding to the carrier 2, a CBR of the resource pool corresponding to the carrier 3, and a CBR of the resource pool corresponding to the carrier 4.

In some embodiments, step S402 may be performed before step S401.

S403: The terminal A sends a CBR measurement result c to the network device.

The CBR measurement result c may include the resource pool identifier included in the CBR measurement configuration c. The resource pool identifier includes the identifier of the resource pool corresponding to the carrier included in the first carrier list. For example, assuming that the CBR measurement configuration c includes an identifier of the resource pool corresponding to the carrier 1, the CBR measurement result c may also include the identifier of the resource pool corresponding to the carrier 1.

The network device receives the CBR measurement result c sent by the terminal A, and schedules an SL resource or provides an SL resource configuration for the terminal A based on the CBR that is of the resource pool and that is included in the CBR measurement result c.

The foregoing process may be understood as follows: Before receiving the SL RRC reconfiguration complete message, the terminal A performs SL communication based on the first carrier list.

S404: The terminal A receives the SL RRC reconfiguration complete message.

In some embodiments, when the terminal A performs SL communication with a terminal B, the terminal A sends an SL RRC reconfiguration message to the terminal B. After receiving the SL RRC reconfiguration message sent by the terminal A, the terminal B sends the SL RRC reconfiguration complete message to the terminal A. The RRC reconfiguration complete message may be a 1^{st} SL RRC reconfiguration complete message sent by the terminal B to the terminal A in a process in which the terminal A establishes an SL communication link with the terminal B. The SL RRC reconfiguration complete message may be the SL RRC reconfiguration complete message corresponding to the SL RRC reconfiguration message including an SL carrier configuration.

S405: The network device sends a CBR measurement configuration d to the terminal A.

After receiving the SL RRC reconfiguration complete message, the terminal A may obtain the CBR measurement configuration d from the network device. The CBR measurement configuration d may include a resource pool identifier. The resource pool identifier indicates a resource pool corresponding to the CBR measurement configuration. The resource pool identifier includes an identifier of a resource pool corresponding to a carrier included in a first resource set, and the first resource set may include the first carrier list and a second carrier list.

In an optional embodiment, the resource pool identifier in the CBR measurement configuration d may include the identifier of the resource pool corresponding to the carrier in the first carrier list and an identifier of a resource pool corresponding to a carrier included in the second carrier list. For example, the resource pool identifier in the CBR measurement configuration d may be sequentially numbered from 0 based on the resource pools corresponding to the carriers included in the first carrier list and the second carrier list. For example, 0, 1, ..., and X-1 respectively indicate X resource pools corresponding to the carrier included in the first carrier list, and X, X+1, ..., and X+Y-1 respectively indicate Y resource pools corresponding to the carrier included in the second carrier list. In another optional embodiment, the resource pool identifier in the CBR measurement configuration d may further include identifiers of resource pools corresponding to some carriers in the first carrier list and the second carrier list. For example, the resource pool identifier in the CBR measurement configuration d may include identifiers of resource pools corresponding to all carriers in the first carrier list, the resource pool identifier in the CBR measurement configuration d may include identifiers of resource pools corresponding to all carriers in the second carrier list, the resource pool identifier in the CBR measurement configuration d may include identifiers of resource pools corresponding to some carriers in the first carrier list, the resource pool identifier in the CBR measurement configuration d may include identifiers of resource pools corresponding to some carriers in the second carrier list, or the resource pool identifier in the CBR measurement configuration d may be based on identifiers of resource pools corresponding to some carriers in the first carrier list and identifiers of resource pools corresponding to some carriers in the second carrier list.

The first carrier list is a corresponding carrier list that supports single-carrier SL communication, and the second carrier list is a carrier list that supports multi-carrier SL communication. For example, the first carrier list may be the carrier list corresponding to the SL communication in R16/R17, and the second carrier list may be a carrier list corresponding to SL communication in R18 or R18+. R16 is a 16^{th} public release protocol of the international telecommunications convention, R17 is a 17^{th} public release protocol of the international telecommunications convention, R18 is an R18 protocol in the international telecommunications convention, R18+ is an R18+ protocol in the international telecommunications convention, and the R18+ protocol may be a protocol release after the R18 protocol. In some embodiments, the first carrier list may include only one carrier, or the first carrier list may include only the SL configuration corresponding to one carrier.

Identifiers of resource pools corresponding to different carriers included in the first carrier list or the second carrier list are different. In other words, identifiers of resource pools corresponding to any carrier included in the first carrier list and any carrier included in the second carrier list are different; or identifiers of resource pools corresponding to any two of carriers included in the second carrier list are different.

S406: The terminal A performs CBR measurement.

The terminal A may perform CBR measurement on each currently available SL resource, to determine a CBR of each resource pool. For example, currently available SL resources of the terminal A include the resource pool corresponding to the carrier 1, the resource pool corresponding to the carrier 2, the resource pool corresponding to the carrier 3, and the resource pool corresponding to the carrier 4. The terminal A may perform CBR measurement, to separately determine a CBR of the resource pool corresponding to the carrier 1, a CBR of the resource pool corresponding to the carrier 2, a CBR of the resource pool corresponding to the carrier 3, and a CBR of the resource pool corresponding to the carrier 4.

In some embodiments, step S406 may be performed before step S405.

S407: The terminal A sends a CBR measurement result d to the network device.

A CBR measurement result b may include the resource pool identifier included in the CBR measurement configuration d. The resource pool identifier includes the identifier of the resource pool corresponding to the carrier included in the first resource set. For example, assuming that the CBR measurement configuration d includes the identifier of the resource pool corresponding to the carrier 1 and an identifier of the resource pool corresponding to the carrier 2, the CBR measurement result d may also include the identifier of the resource pool corresponding to the carrier 1 and the identifier of the resource pool corresponding to the carrier 2.

For another example, assuming that the CBR measurement configuration d includes the identifier of the resource pool corresponding to the carrier 1, an identifier of the resource pool corresponding to the carrier 2, an identifier of the resource pool corresponding to the carrier 3, and an identifier of the resource pool corresponding to the carrier 4, the CBR measurement result d may include the identifier of the resource pool corresponding to the carrier 1, the identifier of the resource pool corresponding to the carrier 2, the identifier of the resource pool corresponding to the carrier 3, and the identifier of the resource pool corresponding to the carrier 4.

The network device receives the CBR measurement result d sent by the terminal A, and schedules an SL resource or provides an SL resource configuration for the terminal A based on the CBR that is of the resource pool and that is included in the CBR measurement result d.

The foregoing process may be understood as follows: After receiving the SL RRC reconfiguration complete message, the terminal A performs SL communication based on the first carrier list and the second carrier list.

In the foregoing embodiment, it is specified that after receiving the SL RRC reconfiguration complete message, the terminal receives a CBR measurement configuration and sends a CBR measurement result by using the resource pools included in the first carrier list and the second carrier list, to perform SL communication, so that the terminal appropriately uses two carrier lists, and appropriately processes the CBR measurement configuration and sends the CBR measurement result, to improve SL CA communication performance. In addition, the CBR measurement configuration and the CBR measurement result include a resource pool identifier, and resource pool identifiers corresponding to different carriers are limited to be different, so that the CBR measurement configuration and the CBR measurement result clearly correspond to a resource pool corresponding to a carrier.

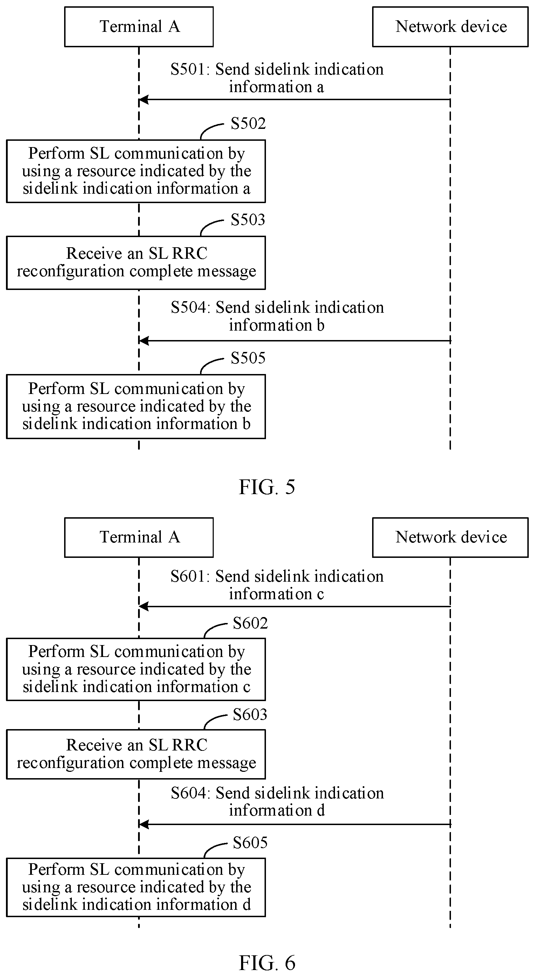

In another optional embodiment, as shown in FIG. 5, an interaction process between a terminal A and a network device may include the following steps.

S501: The network device sends sidelink indication information a to the terminal A.

Before receiving an SL RRC reconfiguration complete message, the terminal A may obtain the sidelink indication information a from the network device. The sidelink indication information a may include a carrier index. The carrier index indicates a resource for performing SL communication. In other words, the carrier index indicates a carrier. The carrier is a carrier corresponding to the resource indicated by the sidelink indication information a. The carrier index may be numbered based on a carrier included in a first carrier list. For example, assuming that the first carrier list includes M carriers, the carrier index may indicate, by using 0, 1, and M-1, the M carriers included in the first carrier list. The first carrier list is a carrier list corresponding to single-carrier SL communication. For example, the first carrier list may be a carrier list corresponding to SL communication in R16/R17. In some embodiments, the first carrier list may include only one carrier, or the first carrier list may include only an SL configuration corresponding to one carrier.

In some embodiments, the sidelink indication information a may further include a resource pool index or a resource pool identifier in addition to the carrier index. The resource pool index or the resource pool identifier indicates a resource pool, and the resource pool is a resource pool corresponding to the resource indicated by the sidelink indication information a. The resource pool index or the resource pool identifier may include an index or an identifier of a resource pool corresponding to each carrier indicated by the carrier index in the sidelink indication information a.

The sidelink resource indication information a may be DCI or SL configured grant (configured grant) information. In an embodiment, the network device may send the DCI to the terminal A, to indicate an SL resource scheduled by the network device for the terminal A. In another embodiment, the network device may send the SL configured grant information to the terminal A, to indicate an SL resource configured by the network device for the terminal A.

S502: The terminal A performs SL communication by using the resource indicated by the sidelink indication information a.

The resource indicated by the sidelink indication information a refers to the carrier indicated by the carrier index in the sidelink indication information a, or the resource pool indicated by the resource pool index or the resource pool identifier in the sidelink indication information a. The terminal A performs SL communication or discovery by using the resource indicated by the sidelink indication information a.

The foregoing process may be understood as follows: Before receiving the SL RRC reconfiguration complete message, the terminal A performs SL communication based on the first carrier list.

S503: The terminal A receives the SL RRC reconfiguration complete message.

In some embodiments, when the terminal A performs SL communication with a terminal B, the terminal A sends an SL RRC reconfiguration message to the terminal B. After receiving the SL RRC reconfiguration message sent by the terminal A, the terminal B sends the SL RRC reconfiguration complete message to the terminal A. The RRC reconfiguration complete message may be a 1^{st} SL RRC reconfiguration complete message sent by the terminal B to the terminal A in a process in which the terminal A establishes an SL communication link with the terminal B. The SL RRC reconfiguration complete message may be the SL RRC reconfiguration complete message corresponding to the SL RRC reconfiguration message including an SL carrier configuration.

S504: The network device sends sidelink indication information b to the terminal A.

After receiving the SL RRC reconfiguration complete message, the terminal A may obtain the sidelink indication information b from the network device. The sidelink resource indication information b may be DCI or SL configured grant information. The sidelink indication information b may include a carrier index. The carrier index indicates a resource for performing SL communication. In other words, the carrier index indicates a carrier. The carrier is a carrier corresponding to the resource indicated by the sidelink indication information b. The carrier index may be numbered based on a carrier included in a first resource set. The first resource set may include the first carrier list and a second carrier list.

In an optional embodiment, the carrier index in the sidelink indication information b may be numbered based on the carrier included in the first carrier list and a carrier included in the second carrier list. For example, assuming that the first carrier list includes a carrier 1, and the second carrier list includes a carrier 2, a carrier 3, and a carrier 4, the carrier index in the sidelink indication information b may indicate the carrier 1, the carrier 2, the carrier 3, and the carrier 4 by using 0, 1, 2, and 3 respectively. For another example, assuming that the first carrier list includes M carriers, and the second carrier list includes N carriers, the carrier index in the sidelink indication information b may indicate, by using 0, 1, and M-1, the M carriers included in the first carrier list, and indicate, by using M, M+1, and M+N-1, the N carriers included in the second carrier list.

In another optional embodiment, the carrier index in the sidelink indication information b may alternatively be numbered based on some carriers included in the first carrier list and the second carrier list. For example, the carrier index in the sidelink indication information b may be numbered based on all carriers included in the first carrier list, the carrier index in the sidelink indication information b may be numbered based on all carriers included in the second carrier list, the carrier index in the sidelink indication information b may be numbered based on some carriers in the first carrier list, the carrier index in the sidelink indication information b may be numbered based on some carriers in the second carrier list, or the carrier index in the sidelink indication information b may be numbered based on some carriers in the first carrier list and some carriers in the second carrier list.

The first carrier list is the corresponding carrier list that supports the single-carrier SL communication, and the second carrier list is a carrier list that supports multi-carrier SL communication. For example, the first carrier list may be the carrier list corresponding to the SL communication in R16/R17, and the second carrier list may be a carrier list corresponding to SL communication in R18 or R18+. R16 is a 16^{th} public release protocol of the international telecommunications convention, R17 is a 17^{th} public release protocol of the international telecommunications convention, R18 is an R18 protocol in the international telecommunications convention, R18+ is an R18+ protocol in the international telecommunications convention, and the R18+ protocol may be a protocol release after the R18 protocol. In some embodiments, the first carrier list may include only one carrier, or the first carrier list may include only the SL configuration corresponding to one carrier.

Indexes or identifiers of resource pools corresponding to different carriers included in the first carrier list or the second carrier list may be the same. An index or an identifier of a resource pool corresponding to a first carrier included in the first carrier list and an index or an identifier of a resource pool corresponding to a second carrier included in the second carrier list may be the same. In other words, indexes or identifiers of resource pools corresponding to any two different carriers in the first resource set may be the same.

In some embodiments, the sidelink indication information b may further include a resource pool index or a resource pool identifier in addition to the carrier index. The resource pool index or the resource pool identifier indicates a resource pool, and the resource pool is a resource pool corresponding to the resource indicated by the sidelink indication information b. The resource pool index or the resource pool identifier may include an index or an identifier of a resource pool corresponding to each carrier indicated by the carrier index in the sidelink indication information b.

S505: The terminal A performs SL communication by using the resource indicated by the sidelink indication information b.

The resource indicated by the sidelink indication information b refers to the carrier indicated by the carrier index in the sidelink indication information b, or the resource pool indicated by the resource pool index or the resource pool identifier in the sidelink indication information b. The terminal A performs SL communication or discovery by using the resource indicated by the sidelink indication information b.

The foregoing process may be understood as follows: After receiving the SL RRC reconfiguration complete message, the terminal A performs SL communication based on the first carrier list and the second carrier list.

In the foregoing embodiment, it is specified that after receiving the SL RRC reconfiguration complete message, the terminal processes, by using the carriers included in the first carrier list and the second carrier list, a sidelink resource obtained from the network device, so that the terminal appropriately uses two carrier lists, and appropriately processes the sidelink resource obtained from the network device, to improve SL CA communication performance. In addition, sidelink indication information includes a carrier index, so that resource pool indexes or resource pool identifiers corresponding to different carriers may be the same, and a resource pool index or resource pool identifier definition is reused.

In another optional embodiment, as shown in FIG. 6, an interaction process between a terminal A and a network device may include the following steps.

S601: The network device sends sidelink indication information c to the terminal A.

Before receiving an SL RRC reconfiguration complete message, the terminal A may obtain the sidelink indication information c from the network device. The sidelink indication information c may include a resource pool index or a resource pool identifier. In some embodiments, the sidelink indication information c may include the resource pool index. In some other embodiments, the sidelink indication information c may include the resource pool identifier. The resource pool index or the resource pool identifier indicates a resource for performing SL communication. In other words, the resource pool index or the resource pool identifier indicates a resource pool, and the resource pool is a resource pool corresponding to the resource indicated by the sidelink resource indication information c. The resource pool index is numbered based on a resource pool corresponding to a carrier included in a first carrier list, and the resource pool identifier includes an identifier of the resource pool corresponding to the carrier included in the first carrier list. The first carrier list is a carrier list corresponding to single-carrier SL communication. For example, the first carrier list may be a carrier list corresponding to SL communication in R16/R17. In some embodiments, the first carrier list may include only one carrier, or the first carrier list may include only an SL configuration corresponding to one carrier.

The sidelink resource indication information c may be DCI or SL configured grant information. In an embodiment, the network device may send the DCI to the terminal A, to indicate an SL resource scheduled by the network device for the terminal A. In another embodiment, the network device may send the SL configured grant information to the terminal A, to indicate an SL resource configured by the network device for the terminal A.

S602: The terminal A performs SL communication by using the resource indicated by the sidelink indication information c.

The resource indicated by the sidelink indication information c is the resource pool indicated by the resource pool index or the resource pool identifier in the sidelink indication information c. The terminal A performs SL communication or discovery by using the resource indicated by the sidelink indication information c.

The foregoing process may be understood as follows: Before receiving the SL RRC reconfiguration complete message, the terminal A performs SL communication based on the first carrier list.

S603: The terminal A receives the SL RRC reconfiguration complete message.

In some embodiments, when the terminal A performs SL communication with a terminal B, the terminal A sends an SL RRC reconfiguration message to the terminal B. After receiving the SL RRC reconfiguration message sent by the terminal A, the terminal B sends the SL RRC reconfiguration complete message to the terminal A. The RRC reconfiguration complete message may be a 1^{st} SL RRC reconfiguration complete message sent by the terminal B to the terminal A in a process in which the terminal A establishes an SL communication link with the terminal B. The SL RRC reconfiguration complete message may be the SL RRC reconfiguration complete message corresponding to the SL RRC reconfiguration message including an SL carrier configuration.

S604: The network device sends sidelink indication information d to the terminal A.

After receiving the SL RRC reconfiguration complete message, the terminal A may obtain the sidelink indication information d from the network device. The sidelink indication information d may include a resource pool index or a resource pool identifier. In some embodiments, the sidelink indication information d may include the resource pool index. In some other embodiments, the sidelink indication information d may include the resource pool identifier. The resource pool index or the resource pool identifier indicates a resource for performing SL communication. In other words, the resource pool index or the resource pool identifier indicates a resource pool, and the resource pool is a resource pool corresponding to the resource indicated by the sidelink resource indication information d. The resource pool index in the sidelink indication information d is numbered based on a resource pool corresponding to a carrier included in a first resource set, and the resource pool identifier in the sidelink indication information d includes an identifier of the resource pool corresponding to the carrier included in the first resource set. The first resource set may include the first carrier list and a second carrier list.

In an optional embodiment, the resource pool index in the sidelink indication information d may be numbered based on the resource pool corresponding to the carrier included in the first carrier list and a resource pool corresponding to a carrier included in the second carrier list. One carrier configuration may include one or more resource pool configurations. For example, the sidelink resource indication information d may be DCI or SL configured grant information. In an embodiment, the network device may send the DCI to the terminal A, to indicate an SL resource scheduled by the network device for the terminal A. The DCI may include the resource pool index, and the resource pool index indicates a resource pool to which the SL resource scheduled by the network device for the terminal A belongs. The resource pool index is sequentially numbered from 0 based on the resource pools corresponding to the carriers included in the configured first carrier list and second carrier list. For example, 0, 1, ..., and X-1 respectively indicate X resource pools corresponding to the carrier included in the first carrier list, and X, X+1, ..., and X+Y-1 respectively indicate Y resource pools corresponding to the carrier included in the second carrier list. In another embodiment, the network device may send the SL configured grant information to the terminal A, to indicate an SL resource configured by the network device for the terminal A. The SL configured grant information includes the resource pool identifier, indicating a resource pool to which the scheduled SL resource belongs. The resource pool identifier is identifiers of the resource pools corresponding to the carriers included in the first carrier list and the second carrier list.

In another optional embodiment, the resource pool index in the sidelink indication information d may alternatively be numbered based on resource pools corresponding to some carriers included in the first carrier list and the second carrier list. For example, the resource pool index in the sidelink indication information d may be numbered based on resource pools corresponding to all carriers included in the first carrier list, the resource pool index in the sidelink indication information d may be numbered based on resource pools corresponding to all carriers included in the second carrier list, the resource pool index in the sidelink indication information d may be numbered based on resource pools corresponding to some carriers in the first carrier list, the resource pool index in the sidelink indication information d may be numbered based on resource pools corresponding to some carriers in the second carrier list, or the resource pool index in the sidelink indication information d may be numbered based on resource pools corresponding to some carriers in the first carrier list and resource pools corresponding to some carriers in the second carrier list.

The first carrier list is the corresponding carrier list that supports the single-carrier SL communication, and the second carrier list is a carrier list that supports multi-carrier SL communication. For example, the first carrier list may be the carrier list corresponding to the SL communication in R16/R17, and the second carrier list may be a carrier list corresponding to SL communication in R18 or R18+. R16 is a 16^{th} public release protocol of the international telecommunications convention, R17 is a 17^{th} public release protocol of the international telecommunications convention, R18 is an R18 protocol in the international telecommunications convention, R18+ is an R18+ protocol in the international telecommunications convention, and the R18+ protocol may be a protocol release after the R18 protocol. In some embodiments, the first carrier list may include only one carrier, or the first carrier list may include only the SL configuration corresponding to one carrier.

Indexes or identifiers of resource pools corresponding to different carriers included in the first carrier list or the second carrier list are different. In other words, indexes or identifiers of resource pools corresponding to any carrier included in the first carrier list and any carrier included in the second carrier list are different; or indexes or identifiers of resource pools corresponding to any two of carriers included in the second carrier list are different.

S605: The terminal A performs SL communication by using the resource indicated by the sidelink indication information d.

The resource indicated by the sidelink indication information d is the resource pool indicated by the resource pool index or the resource pool identifier in the sidelink indication information d. The terminal A performs SL communication or discovery by using the resource indicated by the sidelink indication information d.

The foregoing process may be understood as follows: After receiving the SL RRC reconfiguration complete message, the terminal A performs SL communication based on the first carrier list and the second carrier list.

In the foregoing embodiment, it is specified that after receiving the SL RRC reconfiguration complete message, the terminal processes, by using the resource pools corresponding to the carriers included in the first carrier list and the second carrier list, a sidelink resource obtained from a base station, so that the terminal appropriately uses two carrier lists, and appropriately processes the sidelink resource obtained from the network device, to improve SL CA communication performance. In addition, sidelink resource indication information includes a resource pool index or a resource pool identifier, and resource pool indexes or resource pool identifiers corresponding to different carriers are limited to be different, so that the sidelink resource indication information clearly corresponds to a resource in a resource pool corresponding to a carrier.

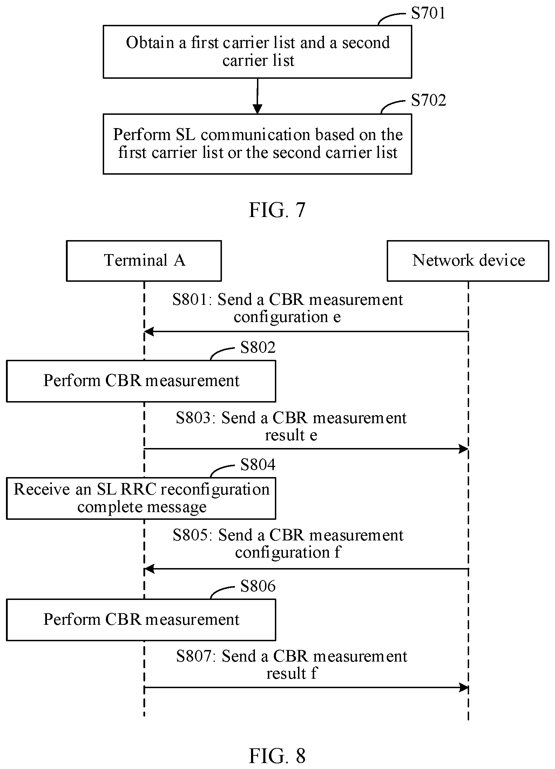

In some other embodiments, the second carrier list includes a carrier in the first carrier list, and the terminal may perform the communication method with reference to a communication method shown in FIG. 7. The communication method shown in FIG. 7 may be performed by a transmitting end (referred to as a terminal A below). As shown in FIG. 7, the communication method may include the following steps.

S701: Obtain a first carrier list and a second carrier list.

The second carrier list includes a carrier in the first carrier list. In other words, a carrier included in the second carrier list overlaps or intersects a carrier included in the first carrier list.

For example, the terminal A may obtain the first carrier list and the second carrier list by using specified information, where the specified message is any one of the following messages: RRC dedicated signaling, a system information block (system information block, SIB) message, and a pre-configuration message, and the RRC dedicated signaling may include but is not limited to RRC configuration information, RRC reconfiguration information, and the like. In some embodiments, the terminal may obtain the first carrier list by using first specified information, where the first specified message may be any one of the following messages: RRC configuration information, RRC reconfiguration information, a SIB message, and a pre-configuration message. The terminal may obtain the second carrier list by using second specified information, where the second specified message may be any one of the following messages: RRC configuration information, RRC reconfiguration information, a SIB message, and a pre-configuration message.

The first carrier list is a carrier list corresponding to single-carrier SL communication, and the second carrier list is a carrier list corresponding to multi-carrier SL communication; or the first carrier list is a carrier list corresponding to SL communication in R16 or R17, and the second carrier list is a carrier list corresponding to SL communication in R18 or R18+. R16 is a 16^{th} public release protocol of the international telecommunications convention, R17 is a 17^{th} public release protocol of the international telecommunications convention, R18 is an R18 protocol in the international telecommunications convention, R18+ is an R18+ protocol in the international telecommunications convention, and the R18+ protocol may be a protocol release after the R18 protocol. In some embodiments, the first carrier list may include only one carrier, or the first carrier list may include only an SL configuration corresponding to one carrier.

S702: Perform SL communication based on the first carrier list or the second carrier list.

In some embodiments, before the terminal A receives an SL RRC reconfiguration complete message sent by a terminal B, in other words, before carrier configuration signaling is completed, the terminal A may perform SL communication based on the first carrier list. For example, the terminal A may perform SL communication by using the carrier included in the first carrier list; or the terminal A performs SL communication by using a resource pool corresponding to the carrier included in the first carrier list.

After the terminal A receives the SL RRC reconfiguration complete message sent by the terminal B, or after the carrier configuration signaling is completed, the terminal A may perform SL communication based on the second carrier list. For example, the terminal A may perform SL communication by using the carrier included in the second carrier list; or the terminal A may perform SL communication by using a resource pool corresponding to the carrier included in the second carrier list. For example, assuming that the second carrier list includes a carrier 1, a carrier 2, and a carrier 3, the terminal A may perform SL communication by using the carrier 1, the carrier 2, and the carrier 3. That is, the terminal A may select, from the carrier 1, the carrier 2, and the carrier 3, an SL resource for performing data transmission. Alternatively, the terminal A may perform SL communication by using a resource pool corresponding to the carrier 1, a resource pool corresponding to the carrier 2, a resource pool corresponding to the carrier 3, and a resource pool corresponding to a carrier 4. That is, the terminal A may select, from the resource pool corresponding to the carrier 1, the resource pool corresponding to the carrier 2, and the resource pool corresponding to the carrier 3, an SL resource for performing data transmission. The RRC reconfiguration complete message may be a 1^{st} SL RRC reconfiguration complete message sent by the terminal B to the terminal A after the terminal A establishes an SL communication link with the terminal B. The SL RRC reconfiguration complete message may be an SL RRC reconfiguration complete message corresponding to an SL RRC reconfiguration message including an SL carrier configuration.

In the foregoing embodiment, it is specified that after receiving the SL RRC reconfiguration complete message, the terminal performs SL communication based on the second carrier list when the second carrier list includes the carrier in the first carrier list based on an inclusion relationship between the first carrier list and the second carrier list, so that the terminal can appropriately use two carrier lists, to improve SL CA communication performance.

In some embodiments, the terminal A may receive a CBR measurement configuration from a network device. The CBR measurement configuration may include a carrier index and a resource pool identifier, indicating a resource pool corresponding to a specified carrier. The resource pool identifier indicates a resource pool corresponding to the CBR measurement configuration. The carrier index indicates a carrier. The carrier is a carrier corresponding to the resource pool corresponding to the CBR measurement configuration. The carrier index may be numbered based on the carrier included in the first carrier list and/or the carrier included in the second carrier list, and the resource pool identifier may include an identifier of a resource pool corresponding to each carrier indicated by the carrier index.

The first carrier list is the corresponding carrier list that supports the single-carrier SL communication, and the second carrier list is the carrier list that supports the multi-carrier SL communication. For example, the first carrier list may be the carrier list corresponding to the SL communication in R16/R17, and the second carrier list may be the carrier list corresponding to the SL communication in R18 or R18+. R16 is the 16^{th} public release protocol of the international telecommunications convention, R17 is the 17^{th} public release protocol of the international telecommunications convention, R18 is the R18 protocol in the international telecommunications convention, R18+ is the R18+ protocol in the international telecommunications convention, and the R18+ protocol may be the protocol release after the R18 protocol. In some embodiments, the first carrier list may include only one carrier, or the first carrier list may include only the SL configuration corresponding to one carrier.

Identifiers of resource pools corresponding to different carriers included in the first carrier list or the second carrier list may be the same. An identifier of a resource pool corresponding to a first carrier included in the first carrier list and an identifier of a resource pool corresponding to a second carrier included in the second carrier list may be the same. In other words, identifiers of resource pools corresponding to any two different carriers in the first carrier list and the second carrier list may be the same. The CBR measurement configuration indicates, by using the carrier index and the resource pool identifier, the resource pool corresponding to the specified carrier. Therefore, even if identifiers of resource pools corresponding to two different carriers are the same, a carrier corresponding to the resource pool indicated by the resource pool identifier may be distinguished by using the carrier index.

The terminal A may send a CBR measurement result to the network device based on the received CBR measurement configuration and the CBR measurement result. The CBR measurement result may include the carrier index and the resource pool identifier that are included in the CBR measurement configuration.

In the foregoing embodiment, the CBR measurement configuration and the CBR measurement result include the carrier index and the resource pool identifier, so that resource pool identifiers corresponding to different carriers may be the same, and a current resource pool identifier definition is reused.

In some other embodiments, the terminal A may receive sidelink indication information from a network device. The sidelink indication information may include a carrier index, indicating a resource for performing SL communication. The terminal A may perform SL communication by using the resource indicated by the sidelink indication information. The carrier index indicates a carrier. The carrier is a carrier corresponding to the resource corresponding to the sidelink indication information. The carrier index may be numbered based on the carrier included in the first carrier list and/or the carrier included in the second carrier list.

In some optional embodiments, the sidelink indication information may further include a resource pool index or a resource pool identifier in addition to the carrier index. The resource pool index or the resource pool identifier indicates a resource pool, and the resource pool is a resource pool corresponding to the resource indicated by the sidelink indication information. The resource pool index or the resource pool identifier may include an index or an identifier of a resource pool corresponding to each carrier indicated by a carrier index in sidelink indication information a.

The first carrier list is the corresponding carrier list that supports the single-carrier SL communication, and the second carrier list is the carrier list that supports the multi-carrier SL communication. For example, the first carrier list may be the carrier list corresponding to the SL communication in R16/R17, and the second carrier list may be the carrier list corresponding to the SL communication in R18 or R18+. R16 is the 16^{th} public release protocol of the international telecommunications convention, R17 is the 17^{th} public release protocol of the international telecommunications convention, R18 is the R18 protocol in the international telecommunications convention, R18+ is the R18+ protocol in the international telecommunications convention, and the R18+ protocol may be the protocol release after the R18 protocol. In some embodiments, the first carrier list may include only one carrier, or the first carrier list may include only the SL configuration corresponding to one carrier.

Indexes or identifiers of resource pools corresponding to different carriers included in the first carrier list or the second carrier list may be the same. An index or an identifier of a resource pool corresponding to a first carrier included in the first carrier list and an index or an identifier of a resource pool corresponding to a second carrier included in the second carrier list may be the same. In other words, indexes or identifiers of resource pools corresponding to any two different carriers in the first carrier list and the second carrier list may be the same.

In the foregoing embodiment, the sidelink indication information includes the carrier index, so that resource pool indexes or resource pool identifiers corresponding to different carriers may be the same, and a current resource pool index or resource pool identifier definition is reused.

The following describes several specific embodiments of this application in detail. In an optional embodiment, as shown in FIG. 8, an interaction process between a terminal A and a network device may include the following steps.

S801: The network device sends a CBR measurement configuration e to the terminal A.

Before receiving an SL RRC reconfiguration complete message, the terminal A may obtain the CBR measurement configuration e from the network device. The CBR measurement configuration e may include a carrier index and a resource pool identifier, indicating a resource pool corresponding to a specified carrier. The resource pool identifier indicates a resource pool corresponding to the CBR measurement configuration. The carrier index indicates a carrier. The carrier is a carrier corresponding to the resource pool corresponding to the CBR measurement configuration e. The carrier index may be numbered based on a carrier included in a first carrier list, and the resource pool identifier may include an identifier of a resource pool corresponding to each carrier indicated by the carrier index. For example, assuming that the first carrier list includes M carriers, the carrier index in the CBR measurement configuration e may indicate, by using 0, 1, and M-1, the M carriers included in the first carrier list. In some embodiments, the first carrier list may include only one carrier, or the first carrier list may include only an SL configuration corresponding to one carrier.

S802: The terminal A performs CBR measurement.

The terminal A may perform CBR measurement on each currently available SL resource, to determine a CBR of each resource pool. For example, currently available SL resources of the terminal A include a resource pool corresponding to a carrier 1, a resource pool corresponding to a carrier 2, and a resource pool corresponding to a carrier 3. The terminal A may perform CBR measurement, to separately determine a CBR of the resource pool corresponding to the carrier 1, a CBR of the resource pool corresponding to the carrier 2, and a CBR of the resource pool corresponding to the carrier 3.

In some embodiments, step S802 may be performed before step S801.

S803: The terminal A sends a CBR measurement result e to the network device.

The CBR measurement result e may include the carrier index and the resource pool identifier that are included in the CBR measurement configuration e. The carrier index may be numbered based on the carrier included in the first carrier list, and the resource pool identifier may include the identifier of the resource pool corresponding to each carrier indicated by the carrier index. For example, assuming that the CBR measurement configuration e includes a carrier index of the carrier 1 and an identifier of the resource pool corresponding to the carrier 1, the CBR measurement result e may include the carrier index of the carrier 1 and the identifier of the resource pool corresponding to the carrier 1.

The network device receives the CBR measurement result e sent by the terminal A, and schedules an SL resource or provides an SL resource configuration for the terminal A based on the CBR that is of the resource pool and that is included in the CBR measurement result e.

The foregoing process may be understood as follows: Before receiving the SL RRC reconfiguration complete message, the terminal A performs SL communication based on the first carrier list.

S804: The terminal A receives the SL RRC reconfiguration complete message.

In some embodiments, when the terminal A performs SL communication with a terminal B, the terminal A sends an SL RRC reconfiguration message to the terminal B. After receiving the SL RRC reconfiguration message sent by the terminal A, the terminal B sends the SL RRC reconfiguration complete message to the terminal A. The RRC reconfiguration complete message may be a 1^{st} SL RRC reconfiguration complete message sent by the terminal B to the terminal A in a process in which the terminal A establishes an SL communication link with the terminal B. The SL RRC reconfiguration complete message may be the SL RRC reconfiguration complete message corresponding to the SL RRC reconfiguration message including an SL carrier configuration.

S805: The network device sends a CBR measurement configuration f to the terminal A.

After receiving the SL RRC reconfiguration complete message, the terminal A may obtain the CBR measurement configuration f from the network device. The CBR measurement configuration f may include a carrier index and a resource pool identifier. The carrier index may be numbered based on a carrier included in a second resource set. The second resource set may include a second carrier list.

In an optional embodiment, the carrier index in the CBR measurement configuration f may be numbered based on a carrier included in the second carrier list, and the resource pool identifier may include an identifier of a resource pool corresponding to each carrier indicated by the carrier index. For example, assuming that the second carrier list includes a carrier 1, a carrier 2, and a carrier 3, the carrier index in the CBR measurement configuration f may indicate the carrier 1, the carrier 2, and the carrier 3 by using 0, 1, and 2 respectively, and the resource pool identifier in the CBR measurement configuration f may include an identifier of a resource pool corresponding to the carrier 1, an identifier of a resource pool corresponding to the carrier 2, and an identifier of a resource pool corresponding to the carrier 3. For another example, assuming that the second carrier list includes N carriers, the carrier index in the CBR measurement configuration f may indicate, by using 0, 1, and N-1, the N carriers included in the second carrier list.

In another optional embodiment, the carrier index in the CBR measurement configuration f may alternatively be numbered based on some carriers included in the second carrier list.

The first carrier list is a corresponding carrier list that supports single-carrier SL communication, and the second carrier list is a carrier list that supports multi-carrier SL communication. For example, the first carrier list may be a carrier list corresponding to SL communication in R16/R17, and the second carrier list may be a carrier list corresponding to SL communication in R18 or R18+. R16 is a 16^{th} public release protocol of the international telecommunications convention, R17 is a 17^{th} public release protocol of the international telecommunications convention, R18 is an R18 protocol in the international telecommunications convention, R18+ is an R18+ protocol in the international telecommunications convention, and the R18+ protocol may be a protocol release after the R18 protocol. In some embodiments, the first carrier list may include only one carrier, or the first carrier list may include only the SL configuration corresponding to one carrier.

Identifiers of resource pools corresponding to different carriers included in the first carrier list or the second carrier list may be the same. An identifier of a resource pool corresponding to a first carrier included in the first carrier list and an identifier of a resource pool corresponding to a second carrier included in the second carrier list may be the same. In other words, identifiers of resource pools corresponding to any two different carriers in the first resource set may be the same. The CBR measurement configuration f indicates, by using the carrier index and the resource pool identifier, a resource pool corresponding to a specified carrier. Therefore, even if identifiers of resource pools corresponding to two different carriers are the same, a carrier corresponding to the resource pool indicated by the resource pool identifier may be distinguished by using the carrier index.

S806: The terminal A performs CBR measurement.

The terminal A may perform CBR measurement on each currently available SL resource, to determine a CBR of each resource pool. For example, currently available SL resources of the terminal A include the resource pool corresponding to the carrier 1, the resource pool corresponding to the carrier 2, and the resource pool corresponding to the carrier 3. The terminal A may perform CBR measurement, to separately determine a CBR of the resource pool corresponding to the carrier 1, a CBR of the resource pool corresponding to the carrier 2, and a CBR of the resource pool corresponding to the carrier 3.

In some embodiments, step S806 may be performed before step S805.

S807: The terminal A sends a CBR measurement result f to the network device.

The CBR measurement result f may include the carrier index and the resource pool identifier that are included in the CBR measurement configuration f. The carrier index may be numbered based on the carrier included in the second resource set, and the resource pool identifier may include the identifier of the resource pool corresponding to each carrier indicated by the carrier index in the CBR measurement configuration f. For example, assuming that the CBR measurement configuration f includes the carrier 1, the identifier of the resource pool corresponding to the carrier 1, the carrier 2, and the identifier of the resource pool corresponding to the carrier 2, the CBR measurement result f may include the carrier 1, the identifier of the resource pool corresponding to the carrier 1, the carrier 2, and the identifier of the resource pool corresponding to the carrier 2.

For another example, assuming that the CBR measurement configuration f includes the carrier 1, the identifier of the resource pool corresponding to the carrier 1, the carrier 2, the identifier of the resource pool corresponding to the carrier 2, the carrier 3, and the identifier of the resource pool corresponding to the carrier 3, the CBR measurement result f may include the carrier 1, the identifier of the resource pool corresponding to the carrier 1, the carrier 2, the identifier of the resource pool corresponding to the carrier 2, the carrier 3, and the identifier of the resource pool corresponding to the carrier 3.

The network device receives the CBR measurement result f sent by the terminal A, and schedules an SL resource or provides an SL resource configuration for the terminal A based on the CBR that is of the resource pool and that is included in the CBR measurement result f.

The foregoing process may be understood as follows: After receiving the SL RRC reconfiguration complete message, the terminal A performs SL communication based on the second carrier list.

In the foregoing embodiment, it is specified that after receiving the SL RRC reconfiguration complete message, the terminal receives a CBR measurement configuration and sends a CBR measurement result by using the carrier included in the second carrier list, to perform SL communication, so that the terminal appropriately uses two carrier lists, and appropriately processes the CBR measurement configuration and sends the CBR measurement result, to improve SL CA communication performance. In addition, the CBR measurement configuration and the CBR measurement result include a carrier index, so that resource pool identifiers corresponding to different carriers may be the same, and a current resource pool identifier definition is reused.

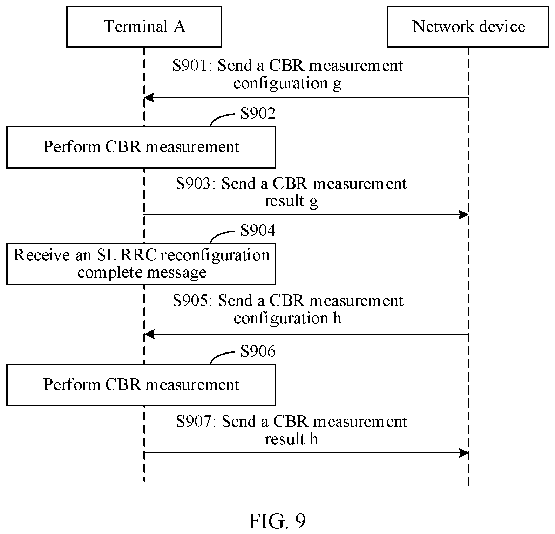

In another optional embodiment, as shown in FIG. 9, an interaction process between a terminal A and a network device may include the following steps.

S901: The network device sends a CBR measurement configuration g to the terminal A.

Before receiving an SL RRC reconfiguration complete message, the terminal A may obtain the CBR measurement configuration g from the network device. The CBR measurement configuration g may include a resource pool identifier. The resource pool identifier indicates a resource pool corresponding to the CBR measurement configuration. The resource pool identifier includes an identifier of a resource pool corresponding to a carrier included in a first carrier list. For example, the first carrier list may be a carrier list corresponding to SL communication in R16/R17. In some embodiments, the first carrier list may include only one carrier, or the first carrier list may include only an SL configuration corresponding to one carrier.

S902: The terminal A performs CBR measurement.

The terminal A may perform CBR measurement on each currently available SL resource, to determine a CBR of each resource pool. For example, currently available SL resources of the terminal A include a resource pool corresponding to a carrier 1, a resource pool corresponding to a carrier 2, and a resource pool corresponding to a carrier 3. The terminal A may perform CBR measurement, to separately determine a CBR of the resource pool corresponding to the carrier 1, a CBR of the resource pool corresponding to the carrier 2, and a CBR of the resource pool corresponding to the carrier 3.

In some embodiments, step S902 may be performed before step S901.

S903: The terminal A sends a CBR measurement result g to the network device.

The CBR measurement result g may include the resource pool identifier included in the CBR measurement configuration g. The resource pool identifier includes the identifier of the resource pool corresponding to the carrier included in the first carrier list. For example, assuming that the CBR measurement configuration g includes an identifier of the resource pool corresponding to the carrier 1, the CBR measurement result g may also include the identifier of the resource pool corresponding to the carrier 1.

The network device receives the CBR measurement result g sent by the terminal A, and schedules an SL resource or provides an SL resource configuration for the terminal A based on the CBR that is of the resource pool and that is included in the CBR measurement result g.

The foregoing process may be understood as follows: Before receiving the SL RRC reconfiguration complete message, the terminal A performs SL communication based on the first carrier list.

S904: The terminal A receives the SL RRC reconfiguration complete message.

In some embodiments, when the terminal A performs SL communication with a terminal B, the terminal A sends an SL RRC reconfiguration message to the terminal B. After receiving the SL RRC reconfiguration message sent by the terminal A, the terminal B sends the SL RRC reconfiguration complete message to the terminal A. The RRC reconfiguration complete message may be a 1^{st} SL RRC reconfiguration complete message sent by the terminal B to the terminal A in a process in which the terminal A establishes an SL communication link with the terminal B. The SL RRC reconfiguration complete message may be the SL RRC reconfiguration complete message corresponding to the SL RRC reconfiguration message including an SL carrier configuration.

S905: The network device sends a CBR measurement configuration h to the terminal A.

After receiving the SL RRC reconfiguration complete message, the terminal A may obtain the CBR measurement configuration h from the network device. The CBR measurement configuration h may include a resource pool identifier. The resource pool identifier indicates a resource pool corresponding to the CBR measurement configuration. The resource pool identifier includes an identifier of a resource pool corresponding to a carrier included in a second resource set, and the second resource set may include a second carrier list.

In an optional embodiment, the resource pool identifier in the CBR measurement configuration h may include an identifier of a resource pool corresponding to a carrier included in the second carrier list. For example, assuming that the second carrier list includes a carrier 1, a carrier 2, and a carrier 3, a resource pool identifier in a CBR measurement configuration f may include an identifier of a resource pool corresponding to the carrier 1, an identifier of a resource pool corresponding to the carrier 2, and an identifier of a resource pool corresponding to the carrier 3. For example, the resource pool identifier in the CBR measurement configuration h may be sequentially numbered from 0 based on the resource pool corresponding to the carrier included in the second carrier list. For example, 0, 1, ..., and Y-1 respectively indicate Y resource pools corresponding to the carrier included in the second carrier list. In another optional embodiment, a resource pool identifier in a CBR measurement configuration d may include identifiers of resource pools corresponding to some carriers in the second carrier list.

The first carrier list is a corresponding carrier list that supports single-carrier SL communication, and the second carrier list is a carrier list that supports multi-carrier SL communication. For example, the first carrier list may be the carrier list corresponding to the SL communication in R16/R17, and the second carrier list may be a carrier list corresponding to SL communication in R18 or R18+. R16 is a 16^{th} public release protocol of the international telecommunications convention, R17 is a 17^{th} public release protocol of the international telecommunications convention, R18 is an R18 protocol in the international telecommunications convention, R18+ is an R18+ protocol in the international telecommunications convention, and the R18+ protocol may be a protocol release after the R18 protocol. In some embodiments, the first carrier list may include only one carrier, or the first carrier list may include only the SL configuration corresponding to one carrier.

Identifiers of resource pools corresponding to different carriers included in the first carrier list or the second carrier list are different. In other words, identifiers of resource pools corresponding to any carrier included in the first carrier list and any carrier included in the second carrier list are different; or identifiers of resource pools corresponding to any two of carriers included in the second carrier list are different.

S906: The terminal A performs CBR measurement.

The terminal A may perform CBR measurement on each currently available SL resource, to determine a CBR of each resource pool. For example, currently available SL resources of the terminal A include the resource pool corresponding to the carrier 1, the resource pool corresponding to the carrier 2, and the resource pool corresponding to the carrier 3. The terminal A may perform CBR measurement, to separately determine a CBR of the resource pool corresponding to the carrier 1, a CBR of the resource pool corresponding to the carrier 2, and a CBR of the resource pool corresponding to the carrier 3.

In some embodiments, step S906 may be performed before step S905.

S907: The terminal A sends a CBR measurement result h to the network device.

The CBR measurement result h may include the resource pool identifier included in the CBR measurement configuration h. The resource pool identifier includes the identifier of the resource pool corresponding to the carrier included in the second resource set. For example, assuming that the CBR measurement configuration h includes the identifier of the resource pool corresponding to the carrier 1 and the identifier of the resource pool corresponding to the carrier 2, the CBR measurement result h may also include the identifier of the resource pool corresponding to the carrier 1 and the identifier of the resource pool corresponding to the carrier 2.

For another example, assuming that the CBR measurement configuration h includes the identifier of the resource pool corresponding to the carrier 1, the identifier of the resource pool corresponding to the carrier 2, and the identifier of the resource pool corresponding to the carrier 3, the CBR measurement result h may include the identifier of the resource pool corresponding to the carrier 1, the identifier of the resource pool corresponding to the carrier 2, and the identifier of the resource pool corresponding to the carrier 3.

The network device receives the CBR measurement result h sent by the terminal A, and schedules an SL resource or provides an SL resource configuration for the terminal A based on the CBR that is of the resource pool and that is included in the CBR measurement result h.

In the foregoing embodiment, it is specified that after receiving the SL RRC reconfiguration complete message, the terminal receives a CBR measurement configuration and sends a CBR measurement result by using the resource pool included in the second carrier list, to perform SL communication, so that the terminal appropriately uses two carrier lists, and appropriately processes the CBR measurement configuration and sends the CBR measurement result, to improve SL CA communication performance. In addition, the CBR measurement configuration and the CBR measurement result include a resource pool identifier, and resource pool identifiers corresponding to different carriers are limited to be different, so that the CBR measurement configuration and the CBR measurement result clearly correspond to a resource pool corresponding to a carrier.

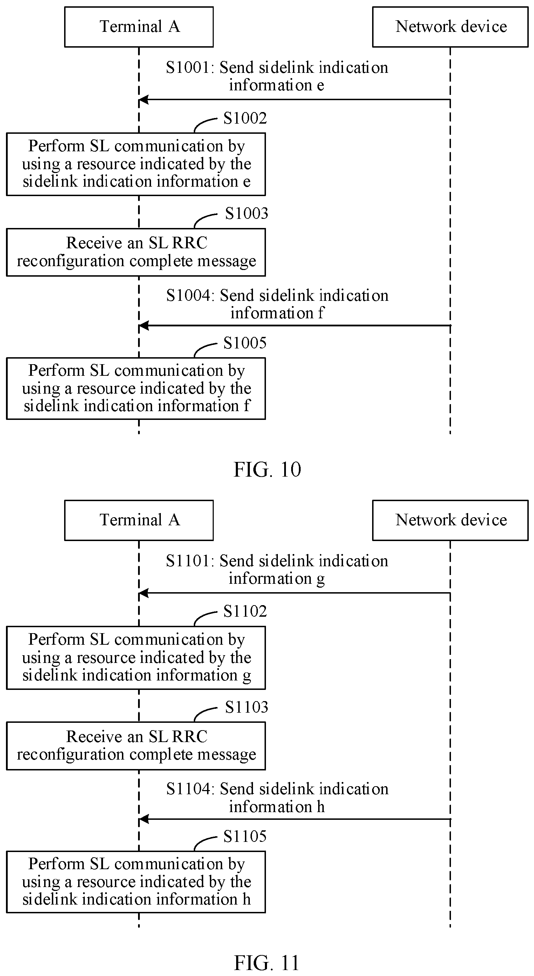

In another optional embodiment, as shown in FIG. 10, an interaction process between a terminal A and a network device may include the following steps.

S1001: The network device sends sidelink indication information e to the terminal A.

Before receiving an SL RRC reconfiguration complete message, the terminal A may obtain the sidelink indication information e from the network device. The sidelink resource indication information e may be DCI or SL configured grant information. The sidelink indication information e may include a carrier index. The carrier index indicates a resource for performing SL communication. In other words, the carrier index indicates a carrier. The carrier is a carrier corresponding to the resource indicated by the sidelink indication information e. The carrier index may be numbered based on a carrier included in a first carrier list. For example, assuming that the first carrier list includes M carriers, the carrier index may indicate, by using 0, 1, and M-1, the M carriers included in the first carrier list. The first carrier list is a carrier list corresponding to single-carrier SL communication. For example, the first carrier list may be a carrier list corresponding to SL communication in R16/R17. In some embodiments, the first carrier list may include only one carrier, or the first carrier list may include only an SL configuration corresponding to one carrier.

In some embodiments, the sidelink indication information e may further include a resource pool index or a resource pool identifier in addition to the carrier index. The resource pool index or the resource pool identifier indicates a resource pool, and the resource pool is a resource pool corresponding to the resource indicated by the sidelink indication information e. The resource pool index or the resource pool identifier may include an index or an identifier of a resource pool corresponding to each carrier indicated by the carrier index in the sidelink indication information e.

S1002: The terminal A performs SL communication by using the resource indicated by the sidelink indication information e.

The resource indicated by the sidelink indication information e refers to the carrier indicated by the carrier index in the sidelink indication information e, or the resource pool indicated by the resource pool index or the resource pool identifier in the sidelink indication information e. The terminal A performs SL communication or discovery by using the resource indicated by the sidelink indication information e.

The foregoing process may be understood as follows: Before receiving the SL RRC reconfiguration complete message, the terminal A performs SL communication based on the first carrier list.

S1003: The terminal A receives the SL RRC reconfiguration complete message.

In some embodiments, when the terminal A performs SL communication with a terminal B, the terminal A sends an SL RRC reconfiguration message to the terminal B. After receiving the SL RRC reconfiguration message sent by the terminal A, the terminal B sends the SL RRC reconfiguration complete message to the terminal A. The RRC reconfiguration complete message may be a 1^{st} SL RRC reconfiguration complete message sent by the terminal B to the terminal A in a process in which the terminal A establishes an SL communication link with the terminal B. The SL RRC reconfiguration complete message may be the SL RRC reconfiguration complete message corresponding to the SL RRC reconfiguration message including an SL carrier configuration.

S1004: The network device sends sidelink indication information f to the terminal A.

After receiving the SL RRC reconfiguration complete message, the terminal A may obtain the sidelink indication information f from the network device. The sidelink resource indication information f may be DCI or SL configured grant information. The sidelink indication information f may include a carrier index. The carrier index indicates a resource for performing SL communication. In other words, the carrier index indicates a carrier. The carrier is a carrier corresponding to a resource indicated by sidelink indication information b. The carrier index may be numbered based on a carrier included in a second resource set. The second resource set may include a second carrier list.

In an optional embodiment, the carrier index in the sidelink indication information f may be numbered based on a carrier included in the second carrier list. For example, assuming that the second carrier list includes a carrier 1, a carrier 2, and a carrier 3, the carrier index in the sidelink indication information f may indicate the carrier 1, the carrier 2, and the carrier 3 by using 0, 1, and 2 respectively. For another example, assuming that the second carrier list includes N carriers, the carrier index in the sidelink indication information f may indicate, by using 0, 1, and N-1, the N carriers included in the second carrier list.

In another optional embodiment, the carrier index in the sidelink indication information f may alternatively be numbered based on some carriers included in the second carrier list.

The first carrier list is the corresponding carrier list that supports the single-carrier SL communication, and the second carrier list is a carrier list that supports multi-carrier SL communication. For example, the first carrier list may be the carrier list corresponding to the SL communication in R16/R17, and the second carrier list may be a carrier list corresponding to SL communication in R18 or R18+. R16 is a 16^{th} public release protocol of the international telecommunications convention, R17 is a 17^{th} public release protocol of the international telecommunications convention, R18 is an R18 protocol in the international telecommunications convention, R18+ is an R18+ protocol in the international telecommunications convention, and the R18+ protocol may be a protocol release after the R18 protocol. In some embodiments, the first carrier list may include only one carrier, or the first carrier list may include only the SL configuration corresponding to one carrier.

Indexes or identifiers of resource pools corresponding to different carriers included in the first carrier list or the second carrier list may be the same. An index or an identifier of a resource pool corresponding to a first carrier included in the first carrier list and an index or an identifier of a resource pool corresponding to a second carrier included in the second carrier list may be the same. In other words, indexes or identifiers of resource pools corresponding to any two different carriers in the first resource set may be the same.

In some embodiments, the sidelink indication information f may further include a resource pool index or a resource pool identifier in addition to the carrier index. The resource pool index or the resource pool identifier indicates a resource pool, and the resource pool is a resource pool corresponding to the resource indicated by the sidelink indication information f. The resource pool index or the resource pool identifier may include an index or an identifier of a resource pool corresponding to each carrier indicated by the carrier index in the sidelink indication information f.

S1005: The terminal A performs SL communication by using the resource indicated by the sidelink indication information f.

The resource indicated by the sidelink indication information f refers to the carrier indicated by the carrier index in the sidelink indication information f, or the resource pool indicated by the resource pool index or the resource pool identifier in the sidelink indication information f. The terminal A performs SL communication or discovery by using the resource indicated by the sidelink indication information f.

The foregoing process may be understood as follows: After receiving the SL RRC reconfiguration complete message, the terminal A performs SL communication based on the second carrier list.

In the foregoing embodiment, it is specified that after receiving the SL RRC reconfiguration complete message, the terminal processes, by using the carrier included in the second carrier list, a sidelink resource obtained from a base station, so that the terminal appropriately uses two carrier lists, and appropriately processes the sidelink resource obtained from the network device, to improve SL CA communication performance. In addition, sidelink indication information includes a carrier index, so that resource pool indexes or resource pool identifiers corresponding to different carriers may be the same, and a resource pool index or resource pool identifier definition is reused.

In another optional embodiment, as shown in FIG. 11, an interaction process between a terminal A and a network device may include the following steps.

S1101: The network device sends sidelink indication information g to the terminal A.

Before receiving an SL RRC reconfiguration complete message, the terminal A may obtain the sidelink indication information g from the network device. The sidelink resource indication information g may be DCI or SL configured grant information. The sidelink indication information g may include a resource pool index or a resource pool identifier. In some embodiments, the sidelink indication information g may include the resource pool index. In some other embodiments, the sidelink indication information g may include the resource pool identifier. The resource pool index or the resource pool identifier indicates a resource for performing SL communication. In other words, the resource pool index or the resource pool identifier indicates a resource pool, and the resource pool is a resource pool corresponding to a resource indicated by first sidelink resource indication information. The resource pool index is numbered based on a resource pool corresponding to a carrier included in a first carrier list, and the resource pool identifier includes an identifier of the resource pool corresponding to the carrier included in the first carrier list. The first carrier list is a carrier list corresponding to single-carrier SL communication. For example, the first carrier list may be a carrier list corresponding to SL communication in R16/R17. In some embodiments, the first carrier list may include only one carrier, or the first carrier list may include only an SL configuration corresponding to one carrier.

S1102: The terminal A performs SL communication by using the resource indicated by the sidelink indication information g.

The resource indicated by the sidelink indication information g is the resource pool indicated by the resource pool index or the resource pool identifier in the sidelink indication information g. The terminal A performs SL communication or discovery by using the resource indicated by the sidelink indication information g.

The foregoing process may be understood as follows: Before receiving the SL RRC reconfiguration complete message, the terminal A performs SL communication based on the first carrier list.

S1103: The terminal A receives the SL RRC reconfiguration complete message.

In some embodiments, when the terminal A performs SL communication with a terminal B, the terminal A sends an SL RRC reconfiguration message to the terminal B. After receiving the SL RRC reconfiguration message sent by the terminal A, the terminal B sends the SL RRC reconfiguration complete message to the terminal A. The RRC reconfiguration complete message may be a 1^{st} SL RRC reconfiguration complete message sent by the terminal B to the terminal A in a process in which the terminal A establishes an SL communication link with the terminal B. The SL RRC reconfiguration complete message may be the SL RRC reconfiguration complete message corresponding to the SL RRC reconfiguration message including an SL carrier configuration.

S1104: The network device sends sidelink indication information h to the terminal A.

After receiving the SL RRC reconfiguration complete message, the terminal A may obtain the sidelink indication information h from the network device. The sidelink indication information h may include a resource pool index or a resource pool identifier. In some embodiments, the sidelink indication information h may include the resource pool index. In some other embodiments, the sidelink indication information h may include the resource pool identifier. The resource pool index or the resource pool identifier indicates a resource for performing SL communication. In other words, the resource pool index or the resource pool identifier indicates a resource pool, and the resource pool is a resource pool corresponding to the resource indicated by the sidelink resource indication information h. The resource pool index in the sidelink indication information h is numbered based on a resource pool corresponding to a carrier included in a second resource set, and the resource pool identifier in the sidelink indication information h includes an identifier of the resource pool corresponding to the carrier included in the second resource set. The second resource set may include a second carrier list.

In an optional embodiment, the resource pool index in the sidelink indication information h may be numbered based on a resource pool corresponding to a carrier included in the second carrier list. In another optional embodiment, the resource pool index in the sidelink indication information h may alternatively be numbered based on resource pools corresponding to some carriers included in the second carrier list.

The first carrier list is the corresponding carrier list that supports the single-carrier SL communication, and the second carrier list is a carrier list that supports multi-carrier SL communication. For example, the first carrier list may be the carrier list corresponding to the SL communication in R16/R17, and the second carrier list may be a carrier list corresponding to SL communication in R18 or R18+. R16 is a 16^{th} public release protocol of the international telecommunications convention, R17 is a 17^{th} public release protocol of the international telecommunications convention, R18 is an R18 protocol in the international telecommunications convention, R18+ is an R18+ protocol in the international telecommunications convention, and the R18+ protocol may be a protocol release after the R18 protocol. In some embodiments, the first carrier list may include only one carrier, or the first carrier list may include only the SL configuration corresponding to one carrier.

Indexes or identifiers of resource pools corresponding to different carriers included in the first carrier list or the second carrier list are different. In other words, indexes or identifiers of resource pools corresponding to any carrier included in the first carrier list and any carrier included in the second carrier list are different; or indexes or identifiers of resource pools corresponding to any two of carriers included in the second carrier list are different.

S1105: The terminal A performs SL communication by using the resource indicated by the sidelink indication information h.

The resource indicated by the sidelink indication information h is the resource pool indicated by the resource pool index or the resource pool identifier in the sidelink indication information h. The terminal A performs SL communication or discovery by using the resource indicated by the sidelink indication information h.

The foregoing process may be understood as follows: After receiving the SL RRC reconfiguration complete message, the terminal A performs SL communication based on the second carrier list.

In the foregoing embodiment, it is specified that after receiving the SL RRC reconfiguration complete message, the terminal processes, by using the resource pool corresponding to the carrier included in the second carrier list, a sidelink resource obtained from a base station, so that the terminal appropriately uses two carrier lists, and appropriately processes the sidelink resource obtained from the network device, to improve SL CA communication performance. In addition, sidelink resource indication information includes a resource pool index or a resource pool identifier, and resource pool indexes or resource pool identifiers corresponding to different carriers are limited to be different, so that the sidelink resource indication information clearly corresponds to a resource in a resource pool corresponding to a carrier.

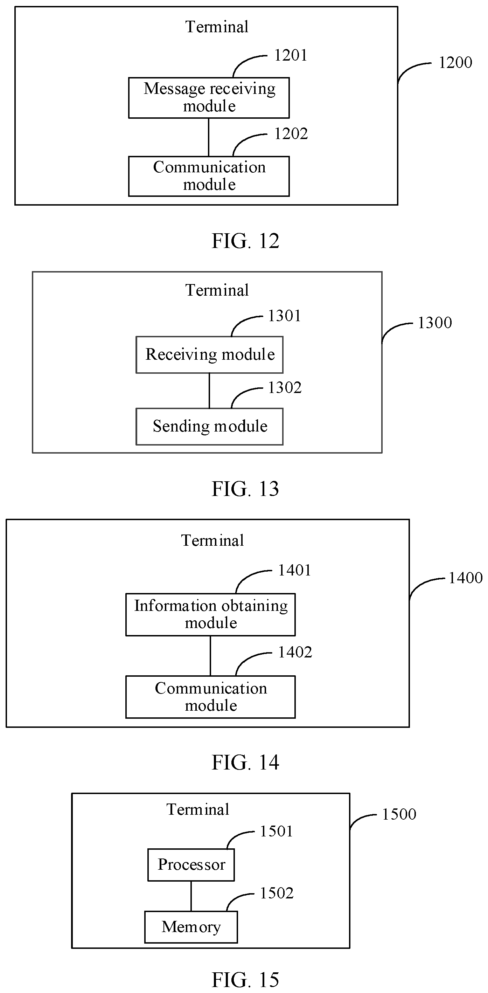

Based on a same design concept as the foregoing method embodiments, an embodiment of this application further provides a terminal. The terminal may be configured to implement the functions in the foregoing method embodiments, and therefore can implement the beneficial effects of the foregoing method embodiments. As shown in FIG. 12, the terminal 1200 may include a message receiving module 1201 and a communication module 1202.

The message receiving module 1201 may be configured to receive an SL RRC reconfiguration complete message; and the communication module 1202 may be configured to determine, based on an inclusion relationship between a first carrier list and a second carrier list, to perform sidelink SL communication by using a first resource set or a second resource set, where the first resource set is a resource set determined based on the first carrier list and the second carrier list, and the second resource set is a resource set determined based on the second carrier list. The first carrier list is a carrier list corresponding to single-carrier SL communication, and the second carrier list is a carrier list corresponding to multi-carrier SL communication.

In some embodiments, the communication module 1202 may be specifically configured to: when the second carrier list does not include a carrier in the first carrier list, perform SL communication by using the first resource set, where the first resource set includes the carrier included in the first carrier list and/or a resource pool corresponding to the carrier, and a carrier included in the second carrier list and/or a resource pool corresponding to the carrier.

In an embodiment, the communication module 1202 may be specifically configured to: obtain a first channel busy ratio CBR measurement configuration from a network device, where the first CBR measurement configuration includes a first carrier index and a first resource pool identifier, the first carrier index is numbered based on a carrier included in the first resource set, and the first resource pool identifier includes an identifier of a resource pool corresponding to each carrier indicated by the first carrier index; and send a first CBR measurement result to the network device, where the first CBR measurement result includes the first carrier index and the first resource pool identifier.

In another embodiment, the communication module 1202 may be specifically configured to: obtain a second CBR measurement configuration from a network device, where the second CBR measurement configuration includes a first resource pool identifier, and the first resource pool identifier includes an identifier of a resource pool corresponding to a carrier included in the first resource set; and send a second CBR measurement result to the network device, where the second CBR measurement result includes the first resource pool identifier.

In an embodiment, the communication module 1202 may be specifically configured to: obtain first sidelink indication information from a network device; and perform SL communication by using a resource indicated by the first sidelink indication information, where the first sidelink indication information includes a first carrier index, the first carrier index indicates the resource for performing SL communication, and the first carrier index is numbered based on a carrier included in the first resource set.

In another embodiment, the communication module 1202 may be specifically configured to: obtain second sidelink indication information from a network device; and perform SL communication by using a resource indicated by the second sidelink indication information, where the second sidelink indication information includes a first resource pool index or a first resource pool identifier, the first resource pool index or the first resource pool identifier indicates the resource for performing SL communication, the first resource pool index is numbered based on a resource pool corresponding to a carrier included in the first resource set, and the first resource pool identifier includes an identifier of the resource pool corresponding to the carrier included in the first resource set.

In some other embodiments, the communication module 1202 may be specifically configured to: when the second carrier list includes a carrier in the first carrier list, perform SL communication by using the second resource set, where the second resource set includes a carrier included in the second carrier list and/or a resource pool corresponding to the carrier.

In an embodiment, the communication module 1202 may be specifically configured to: obtain a third CBR measurement configuration from a network device, where the third CBR measurement configuration includes a second carrier index and a second resource pool identifier, the second carrier index is numbered based on a carrier included in the second resource set, and the second resource pool identifier includes an identifier of a resource pool corresponding to each carrier indicated by the second carrier index; and send a third CBR measurement result to the network device, where the third CBR measurement result includes the second carrier index and the second resource pool identifier.

In another embodiment, the communication module 1202 may be specifically configured to: obtain a fourth CBR measurement configuration from a network device, where the fourth CBR measurement configuration includes a second resource pool identifier, and the second resource pool identifier includes an identifier of a resource pool corresponding to a carrier included in the second resource set; and send a fourth CBR measurement result to the network device, where the fourth CBR measurement result includes the second resource pool identifier.

In an embodiment, the communication module 1202 may be specifically configured to: obtain third sidelink indication information from a network device; and perform SL communication by using a resource indicated by the third sidelink indication information, where the third sidelink indication information includes a second carrier index, the second carrier index indicates the resource for performing SL communication, and the second carrier index is numbered based on a carrier included in the second resource set.

In another embodiment, the communication module 1202 may be specifically configured to: obtain fourth sidelink indication information from a network device; and perform SL communication by using a resource indicated by the fourth sidelink indication information, where the fourth sidelink indication information includes a second resource pool index or a second resource pool identifier, the second resource pool index or the second resource pool identifier indicates the resource for performing SL communication, the second resource pool index is numbered based on a resource pool corresponding to a carrier included in the second resource set, and the second resource pool identifier includes an identifier of the resource pool corresponding to the carrier included in the second resource set.

Functional modules in embodiments of this application may be integrated into one processor, each of the modules may exist alone physically, or two or more modules are integrated into one module. The integrated module may be implemented in a form of hardware, or may be implemented in a form of a software functional unit.

Based on a same design concept as the foregoing method embodiments, an embodiment of this application further provides a terminal. As shown in FIG. 13, the terminal 1300 may include a receiving module 1301 and a sending module 1302. The receiving module 1301 may be configured to obtain a channel busy ratio CBR measurement configuration from a network device, where the CBR measurement configuration includes a carrier index and a resource pool identifier, the carrier index indicates a target carrier, and the resource pool identifier indicates a target resource pool in resource pools corresponding to the target carrier; and the sending module 1302 may be configured to send a CBR measurement result to the network device, where the CBR measurement result includes the carrier index and the resource pool identifier.

In some embodiments, identifiers of resource pools corresponding to a first carrier and a second carrier are the same; and the first carrier is any carrier in a first carrier list, and the second carrier is any carrier in a second carrier list; or the first carrier and the second carrier are any two carriers in a second carrier list.

Functional modules in embodiments of this application may be integrated into one processor, each of the modules may exist alone physically, or two or more modules are integrated into one module. The integrated module may be implemented in a form of hardware, or may be implemented in a form of a software functional unit.

Based on a same design concept as the foregoing method embodiments, an embodiment of this application further provides a terminal. As shown in FIG. 14, the terminal 1400 may include an information obtaining module 1401 and a communication module 1402. The information obtaining module 1401 may be configured to obtain sidelink indication information from a network device, where the sidelink indication information includes a carrier index, and the carrier index indicates a resource for performing SL communication; and the communication module 1402 may be configured to perform SL communication by using the resource indicated by the sidelink indication information.

In some embodiments, identifiers of resource pools corresponding to a first carrier and a second carrier are the same; and the first carrier is any carrier in a first carrier list, and the second carrier is any carrier in a second carrier list; or the first carrier and the second carrier are any two carriers in a second carrier list.

Functional modules in embodiments of this application may be integrated into one processor, each of the modules may exist alone physically, or two or more modules are integrated into one module. The integrated module may be implemented in a form of hardware, or may be implemented in a form of a software functional unit.

Based on a same technical concept as the foregoing method embodiments, an embodiment of this application further provides a terminal. The terminal may be the terminal A shown in FIG. 1. The terminal may be configured to implement the functions in the foregoing method embodiments, and therefore can implement the beneficial effects of the foregoing method embodiments.

In some embodiments, a structure of the terminal 1500 may be shown in FIG. 15, includes a processor 1501 and a memory 1502 connected to the processor 1501. The processor 1501 and the memory 1502 may be connected to each other through a bus. The processor 1501 may be a general-purpose processor, for example, a microprocessor, or another conventional processor. The bus may be a peripheral component interconnect (peripheral component interconnect, PCI) bus, an extended industry standard architecture (extended industry standard architecture, EISA) bus, or the like. Buses may be classified into an address bus, a data bus, a control bus, and the like.

The memory 1502 may be configured to store a software program and a module. The processor 1501 runs the software program and the module that are stored in the memory 1502, to perform various function applications and data processing of the terminal 1500, for example, the communication methods provided in embodiments of this application.

The memory 1502 may mainly include a program storage area and a data storage area. The program storage area may store an operating system, an application program of at least one application, and the like. The data storage area may be for storing user data, and the like. In addition, the memory 1502 may include a high-speed random access memory, or may include a nonvolatile memory, for example, at least one magnetic disk storage device, a flash memory, or another volatile solid-state storage device.

The processor 1501 in the terminal 1500 is configured to run computer instructions or the program stored in the memory 1502, to perform the functions in any one of the foregoing method embodiments.

In some embodiments, the processor 1501 may include one or more processing units, and different processing units may be independent devices, or may be integrated into one or more processors. The processor 1501 may further include a controller. The controller may generate an operation control signal based on instruction operation code and a time sequence signal, to complete control of instruction fetching and instruction execution.

In an embodiment, the terminal 1500 may further include a communication module, and the communication module is configured to communicate with another device in a network.

It may be understood that the structure shown in this embodiment of this application does not constitute a specific limitation on a network device. In some other embodiments of this application, a chip may include more or fewer components than those shown in the figure, some components are combined, some components are split, or there may be a different component layout. The components shown in the figure may be implemented by hardware, software, or a combination of software and hardware.

Based on a same technical concept as the foregoing method embodiments, an embodiment of this application further provides a communication system. The communication system may be the communication system shown in FIG. 1, and the communication system may include two terminals for performing SL communication. In some embodiments, the communication system may further include a network device, for example, the network device 100 in FIG. 1.

An embodiment of this application further provides a computer program product, including computer-executable instructions. In an embodiment, the computer-executable instructions are for causing a computer to perform the functions in the foregoing method embodiments.

The computer-executable instructions may be stored in a computer-readable storage medium. An embodiment of this application further provides a computer-readable storage medium. The computer-readable storage medium stores executable instructions. In an embodiment, the computer-executable instructions are for causing a computer to perform the functions in the foregoing method embodiments.

The computer-readable storage medium provided in this embodiment of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of computer-readable storage medium well-known in the art.

The computer-executable instructions may be stored in the computer-readable storage medium, or may be transmitted from a computer-readable storage medium to another computer-readable storage medium. For example, a computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive.

In embodiments of this application, unless otherwise specified or there is a logic conflict, terms and/or descriptions in different embodiments are consistent and may be mutually referenced, and technical features in different embodiments may be combined into a new embodiment based on an internal logical relationship thereof. In addition, the terms "include" and "have", and any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

Although this application is described with reference to specific features and embodiments thereof, it is clear that various modifications and combinations may be made to this application without departing from the spirit and the scope of this application. Correspondingly, this specification and the accompanying drawings are merely example descriptions of solutions defined by the appended claims, and are considered as covering any of or all modifications, variations, combinations, or equivalents within the scope of this application.

It is clear that a person skilled in the art can make various modifications and variations to this application without departing from the scope of this application. This application is intended to cover these modifications and variations of embodiments of this application provided that they fall within the scope of the claims of this application and their equivalent technologies.

## Claims

1. A communication method, wherein the method comprises:
receiving a sidelink radio resource control SL RRC reconfiguration complete message; and
determining, based on an inclusion relationship between a first carrier list and a second carrier list, to perform sidelink SL communication by using a first resource set or a second resource set, wherein the first resource set is a resource set determined based on the first carrier list and the second carrier list, and the second resource set is a resource set determined based on the second carrier list.

2. The method according to claim 1, wherein the first carrier list is a carrier list corresponding to single-carrier SL communication, and the second carrier list is a carrier list corresponding to multi-carrier SL communication.

3. The method according to claim 1 or 2, wherein the determining, based on the inclusion relationship between the first carrier list and the second carrier list, to perform sidelink SL communication by using the first resource set or the second resource set comprises:
if the second carrier list does not comprise a carrier in the first carrier list, performing SL communication by using the first resource set, wherein the first resource set comprises the carrier comprised in the first carrier list and/or a resource pool corresponding to the carrier, and a carrier comprised in the second carrier list and/or a resource pool corresponding to the carrier.

4. The method according to claim 3, wherein the performing SL communication by using the first resource set comprises:
obtaining a first channel busy ratio CBR measurement configuration from a network device, wherein the first CBR measurement configuration comprises a first carrier index and a first resource pool identifier, the first carrier index is numbered based on a carrier comprised in the first resource set, and the first resource pool identifier comprises an identifier of a resource pool corresponding to each carrier indicated by the first carrier index; and
sending a first CBR measurement result to the network device, wherein the first CBR measurement result comprises the first carrier index and the first resource pool identifier.

5. The method according to claim 3, wherein the performing SL communication by using the first resource set comprises:
obtaining a second CBR measurement configuration from a network device, wherein the second CBR measurement configuration comprises a first resource pool identifier, and the first resource pool identifier comprises an identifier of a resource pool corresponding to a carrier comprised in the first resource set; and
sending a second CBR measurement result to the network device, wherein the second CBR measurement result comprises the first resource pool identifier.

6. The method according to claim 3, wherein the performing SL communication by using the first resource set comprises:
obtaining first sidelink indication information from a network device, wherein the first sidelink indication information comprises a first carrier index, the first carrier index indicates a resource for performing SL communication, and the first carrier index is numbered based on a carrier comprised in the first resource set; and
performing SL communication by using the resource indicated by the first sidelink indication information.

7. The method according to claim 3, wherein the performing SL communication by using the first resource set comprises:
obtaining second sidelink indication information from a network device, wherein the second sidelink indication information comprises a first resource pool index or a first resource pool identifier, the first resource pool index or the first resource pool identifier indicates a resource for performing SL communication, the first resource pool index is numbered based on a resource pool corresponding to a carrier comprised in the first resource set, and the first resource pool identifier comprises an identifier of the resource pool corresponding to the carrier comprised in the first resource set; and
performing SL communication by using the resource indicated by the second sidelink indication information.

8. The method according to claim 1 or 2, wherein the determining, based on the inclusion relationship between the first carrier list and the second carrier list, to perform sidelink SL communication by using the first resource set or the second resource set comprises:
if the second carrier list comprises a carrier in the first carrier list, performing SL communication by using the second resource set, wherein the second resource set comprises a carrier comprised in the second carrier list and/or a resource pool corresponding to the carrier.

9. The method according to claim 8, wherein the performing SL communication by using the second resource set comprises:
obtaining a third CBR measurement configuration from a network device, wherein the third CBR measurement configuration comprises a second carrier index and a second resource pool identifier, the second carrier index is numbered based on a carrier comprised in the second resource set, and the second resource pool identifier comprises an identifier of a resource pool corresponding to each carrier indicated by the second carrier index; and
sending a third CBR measurement result to the network device, wherein the third CBR measurement result comprises the second carrier index and the second resource pool identifier.

10. The method according to claim 8, wherein the performing SL communication by using the second resource set comprises:
obtaining a fourth CBR measurement configuration from a network device, wherein the fourth CBR measurement configuration comprises a second resource pool identifier, and the second resource pool identifier comprises an identifier of a resource pool corresponding to a carrier comprised in the second resource set; and
sending a fourth CBR measurement result to the network device, wherein the fourth CBR measurement result comprises the second resource pool identifier.

11. The method according to claim 8, wherein the performing SL communication by using the second resource set comprises:
obtaining third sidelink indication information from a network device, wherein the third sidelink indication information comprises a second carrier index, the second carrier index indicates a resource for performing SL communication, and the second carrier index is numbered based on a carrier comprised in the second resource set; and
performing SL communication by using the resource indicated by the third sidelink indication information.

12. The method according to claim 8, wherein the performing SL communication by using the second resource set comprises:
obtaining fourth sidelink indication information from a network device, wherein the fourth sidelink indication information comprises a second resource pool index or a second resource pool identifier, the second resource pool index or the second resource pool identifier indicates a resource for performing SL communication, the second resource pool index is numbered based on a resource pool corresponding to a carrier comprised in the second resource set, and the second resource pool identifier comprises an identifier of the resource pool corresponding to the carrier comprised in the second resource set; and
performing SL communication by using the resource indicated by the fourth sidelink indication information.

13. The method according to claim 4, 6, 9, or 11, wherein identifiers of resource pools corresponding to a first carrier and a second carrier are the same; and
the first carrier is any carrier in the first carrier list, and the second carrier is any carrier in the second carrier list; or the first carrier and the second carrier are any two carriers in the second carrier list.

14. The method according to claim 5, 7, 10, or 12, wherein identifiers of the resource pools corresponding to the carrier comprised in the first carrier list and the carrier comprised in the second carrier list are different; or identifiers of resource pools corresponding to any two of carriers comprised in the second carrier list are different.

15. The method according to any one of claims 1 to 14, wherein before the receiving the sidelink radio resource control SL RRC reconfiguration complete message, the method further comprises:
obtaining the first carrier list and the second carrier list by using a specified message, wherein the specified message is any one of the following messages: radio resource control RRC configuration information, RRC reconfiguration information, a system information block SIB message, and a pre-configuration message.

16. A terminal, wherein the terminal comprises a module configured to perform the method according to any one of claims 1 to 15.

17. A terminal, wherein the terminal comprises a memory and a processor, the memory stores a computer program, and the processor is configured to execute the computer program stored in the memory, to implement the method according to any one of claims 1 to 15.

18. A computer-readable storage medium, storing computer-executable instructions, wherein the computer-executable instructions are for causing a computer to perform the method according to any one of claims 1 to 15.
